# EUROPÄISCHE PATENTSCHRIFT

(11) **EP 2 391 838 B1**
(45) Veröffentlichungstag und Bekanntmachung des Hinweises auf die Patenterteilung: **20.07.2022**
(21) Anmeldenummer: 10701823.6
(22) Anmeldetag: 27.01.2010
(51) Int. Cl.: F16J 15/328, F16J 15/3284, F16J 15/10, B29C 45/16, B29C 45/26

(54) **Verfahren zur Herstellung einer Dichtung**
Methof of making a seal
Méthode de fabrication d'un joint étanché

(30) Priorität: 27.01.2009 DE 102009007049; 30.10.2009 DE 102009052317; 27.01.2009 DE 102009007048
(43) Veröffentlichungstag der Anmeldung: 07.12.2011
(73) Patentinhaber: Neo-plastic Dr. Doetsch Diespeck GmbH, 91456 Diespeck (DE)
(72) Erfinder: FREIHERR VON TWICKEL, Patrick, 91413 Neustadt/Aisch (DE); FREIHERR VON UND ZU FRANCKENSTEIN, Hubertus, 91085 Weisendorf (DE)
(74) Vertreter: Köhler, Walter
(86) Internationale Anmeldenummer: PCT/EP2010/000477
(87) Internationale Veröffentlichungsnummer: WO 2010/086144

(56) Entgegenhaltungen:
- WO-A1-01/90609
- DE-A1- 4 327 945
- DE-A1-102006 014 439
- FR-A1- 2 901 504
- JP-A- 4 366 635
- JP-A- 5 301 252
- US-A- 5 503 923
- US-A- 6 068 896
- US-B1- 6 394 094

## Beschreibung

Die Erfindung betrifft ein Verfahren zur Herstellung einer Dichtung, die zumindest abschnittsweise einen Kern aus einem harten Kunststoff und eine Haut aus einem vergleichsweise weichen Kunststoff aufweist.

Aus der DE 10 2006 014 439 A1 ist eine Runddichtung bekannt, die einen Kern aus einem harten Kunststoff und eine Haut aus einem weichen Kunststoff aufweist, wobei der Kern vollständig von der Haut umgeben ist.

Aus der WO 01/90609 A1 ist eine Runddichtung und eine Abstreifdichtung bekannt, bei der der Kern aus einem elastischen weichen Material und die Haut aus einem harten Material gebildet ist, wobei der Kern die Haut bis nach außen unter Ausbildung eines Durchbruchs durchgreift.

Aus der DE 2 157 015 A1 ist eine Dichtung aus spritzbarem Werkstoff, insbesondere Kunststoff oder Gummi, bekannt, die einen Dichtlippenträger und eine Dichtlippe aufweist, die in einem einzigen Arbeitsgang in einer Spritzgussform einstückig hergestellt sind. Die Dichtlippe und der Dichtlippenträger bestehen aus verschiedenen spritzbaren Werkstoffen und werden im warmplastischen Zustand miteinander verbunden. Dabei kann der Dichtlippenträger aus einem spritzbaren Werkstoff bestehen, der eine größere Steifigkeit besitzt als der Werkstoff der Dichtlippe. Der Dichtlippenträger kann aus einem spritzbaren faserverstärkten Werkstoff und die Dichtlippe aus einem spritzbaren Werkstoff ohne Faserverstärkung bestehen. Zur Realisierung dieser bekannten Dichtung wird in einer Spritzgussform zunächst der Bereich des Dichtlippenträgers durch eine verschiebbare Trennwand vom Bereich der Dichtlippe getrennt und über getrennte Angusskanäle ein erster spritzbarer Werkstoff in dem Bereich des Dichtlippenträgers und ein zweiter spritzbarer Werkstoff in dem Bereich der Dichtlippe eingespritzt und die Trennwand anschließend aus der Spritzform entfernt. Eine andere Möglichkeit zur Realisierung dieser bekannten Dichtung besteht darin, dass ein spritzbarer faserverstärkter Werkstoff über einen einzigen Angusskanal in eine Spritzform eingespritzt wird, wobei Staukörper im Angusskanal eine wenigstens teilweise Entmischung des im Bereich der Dichtlippe fließenden Werkstoffes bewirken.

Zur Herstellung dieser bekannten Dichtung ist also entweder eine Spritzgussform mit einer Trennwand oder eine Spritzgussform mit Staukörpem erforderlich.

Eine Dichtung für Wälzlager ist beispielsweise aus der DE 1 992 303 U1 oder aus der DE 195 27 340 B4 bekannt. Diese bekannten Dichtungen weisen jeweils einen Dichtungskörper aus einem elastischen Material und einen Metallkörper auf.

Eine Längsdichtung für eine Linearführung mit einem Träger aus einem harten Kunststoff und einer Dichtlippe aus einem vergleichsweise weichen Kunststoff ist aus der DE 10 2007 008 052 A1 der Anmelderin bekannt. Die Dichtlippe ist mit dem Träger durch mindestens eine Materialverschlaufung formschlüssig verbunden.

Aus der JP 4 366 635 A und der US 5,503,923 A sind Zierleisten aus Kunststoff für den Einsatz an der Außenseite von Kfz-Karosserien bekannt, die als Prall- und Kratzschutz der Außenfläche der Karosserie dienen. Sie weisen einen Kern aus hartem Kunststoff und eine Haut aus weichem Kunststoff auf.

Der Erfindung liegt die Aufgabe zugrunde, ein Verfahren zur Herstellung einer Dichtung mit hartem Kern und den Kern umgebender weicher Haut zu schaffen, mit dem es möglich wird, den Fertigungsprozess so zu steuern, dass die Anordnung und Formgestaltung von Kern und Haut bei der Herstellung der Dichtung einfach und zuverlässig gezielt einstellbar ist. Ferner ist es Aufgabe der Erfindung, Dichtungen mit hartem Kern und weicher Haut zu schaffen, die eine vorteilhafte Anordnung und Formgestaltung von Kern und Haut aufweisen. Bei den Vorteilen soll es sich um funktionale Vorteile beim Einsatz der Dichtung und/oder auch um Vorteile in der Herstellbarkeit der Dichtung handeln.

Die Erfindung löst diese Aufgabe mit den Gegenständen der Verfahrensansprüche 1, 2 und 4.

Bei dem Gegenstand des Verfahrensanspruchs 1 handelt es sich um ein Verfahren zur Herstellung einer Längsdichtung, d.h. eine Dichtung, die als Längsdichtung für eine Linearführung ausgebildet ist, die einen gerade oder abgewinkelt sich erstreckenden platten- oder stabförmigen Grundkörper mit mindestens einer an den Grundkörper anschließenden Dichtlippe aufweist, wobei die Dichtlippe sich an zumindest einer Längsseite des Grundkörpers erstreckt und als längsgleitende Dichtlippe der Längsdichtung ausgebildet ist,
wobei die Dichtung zumindest abschnittsweise einen Kern aus einem harten Kunststoff und eine Haut aus einem vergleichsweise weichem Kunststoff aufweist, wobei, der Kern von der Haut weitgehend vollständig umschlossen ist,
wobei der Grundkörper als Kern und Haut gebildet ist und der Grundkörper einen Hauptteil des Kerns aufweist,
wobei die mindestens eine Dichtlippe überwiegend aus Haut ausgebildet ist, indem lediglich ein Abschnitt des Kerns vom Grundkörper weg in den Anschlussbereich der im übrigen aus Haut ausgebildeten Dichtlippe hinein ragt, und der Kern mindestens ein die Haut durchgreifendes Kernende aufweist, welches die Haut bis nach außen unter Ausbildung eines Durchbruchs durchgreift. Bei dem Verfahren zur Herstellung der Längsdichtung wird die Dichtung durch Spritzgießen in einer Spritzgießform mit einer Kavität, die der äußeren Form der Dichtung entspricht, unter Einsatz der Sandwichtechnik hergestellt, wobei die Spritzgießform eine an die Kavität angrenzende Überlaufeinrichtung aufweist, über die die Ausbreitung der Hautkomponente und der Kernkomponente in bestimmten Bereichen der Kavität gesteuert wird, wobei zur Herstellung der Dichtung folgende Schritte ablaufen:
   a) in die Kavität der Spritzgießform wird im Bereich eines Einspritzortes Hautkomponente derart eingespritzt, dass sich die Hautkomponente in der Kavität fortschreitend erstreckt;
   b) in die die Hautkomponente enthaltende Kavität der Spritzgießform wird Kernkomponente derart eingespritzt, dass die Kernkomponente von der Hautkomponente zumindest teilweise umgeben in der Kavität fortschreitet;
   c) über die Überlaufeinrichtung wird die Ausbreitung der Hautkomponente und der Kernkomponente in bestimmten Bereichen der Kavität gesteuert, indem ein Teil der in der Kavität aufgenommenen Hautkomponente und Kernkomponente in die in einem Bereich der Formwandung der Kavität angrenzend angeordnete Überlaufeinrichtung aus der Kavität als Materialüberlauf überläuft.

Bei dem Gegenstand des Verfahrensanspruchs 2 handelt es sich um ein Verfahren zur Herstellung einer als Abstreifdichtung ausgebildeten Dichtung, die eine gerade oder abgewinkelt sich erstreckenden platten- oder stabförmigen Grundkörper mit mindestens einer an den Grundkörper anschließenden Dichtlippe aufweist, wobei die Dichtlippe sich an mindestens einer Längsseite des Grundkörpers erstreckt und als quer gleitende Dichtlippe der Abstreifdichtung ausgebildet ist,
wobei die Dichtung zumindest abschnittsweise einen Kern aus einem harten Kunststoff und eine Haut aus einem vergleichsweise weichen Kunststoff aufweist, wobei die Dichtung mit dem Kern und der Haut durch in Sandwichtechnik Spritzgießen derart hergestellt ist, dass der Kern von der Haut weitgehend vollständig umschlossen ist;
wobei der Grundkörper als Kern und Haut gebildet ist und der Grundkörper einen Hauptteil des Kerns aufweist,
wobei die mindestens eine Dichtlippe überwiegend aus Haut ausgebildet ist, indem lediglich ein Abschnitt des Kerns vom Grundkörper weg in den Anschlussbereich der im übrigen aus Haut ausgebildeten Dichtlippe hineinragt,
und der Kern mindestens ein die Haut durchgreifendes Kernende aufweist, welches die Haut bis nach außen unter Ausbildung eines Durchbruchs durchgreift. Bei dem Verfahren zur Herstellung der Abstreifdichtung wird die Dichtung durch Spritzgießen in einer Spritzgießform mit einer Kavität, die der äußeren Form der Dichtung entspricht, unter Einsatz der Sandwichtechnik hergestellt, wobei die Spritzgießform eine an die Kavität angrenzende Überlaufeinrichtung aufweist, über die die Ausbreitung der Hautkomponente und der Kernkomponente in bestimmten

Bereichen der Kavität gesteuert wird, wobei zur Herstellung der Dichtung folgende Schritte ablaufen:
a) in die Kavität der Spritzgießform wird im Bereich eines Einspritzortes Hautkomponente derart eingespritzt, dass sich die Hautkomponente in der Kavität fortschreitend erstreckt;
b) in die die Hautkomponente enthaltende Kavität der Spritzgießform wird Kernkomponente derart eingespritzt, dass die Kernkomponente von der Hautkomponente zumindest teilweise umgeben in der Kavität fortschreitet;
c) über die Überlaufeinrichtung wird die Ausbreitung der Hautkomponente und der Kernkomponente in bestimmten Bereichen der Kavität gesteuert, indem ein Teil der in der Kavität aufgenommenen Hautkomponente und Kernkomponente in die in einem Bereich der Formwandung der Kavität angrenzend angeordnete Überlaufeinrichtung aus der Kavität als Materialüberlauf überläuft.

Bei dem Gegenstand des Verfahrensanspruchs 4 handelt es sich um ein Verfahren zur Herstellung einer Runddichtung, und zwar einer Dichtung mit einem Kern, der aus einer Kernkomponente aus Kunststoff gebildet ist und einer den Kern zumindest teilweise umgebenden Haut, die aus einer Hautkomponente aus Kunststoff gebildet ist, wobei der Kern härter als die Haut ausgebildet ist,
wobei vorgesehen ist, dass die Dichtung zumindest abschnittsweise einen Kern aus einem harten Kunststoff und eine Haut aus einem vergleichsweise weichen Kunststoff aufweist, wobei vorgesehen ist,
dass die Dichtung mit dem Kern und der Haut durch in Sandwichtechnik Spritzgießen derart hergestellt ist, dass der Kern von der Haut weitgehend vollständig umschlossen ist;
dass die Dichtung als Runddichtung ausgebildet ist, die einen geschlossen ringförmigen Grundkörper mit mindestens einer an den Grundkörper anschließenden Dichtlippe aufweist, wobei die Dichtlippe sich an dem Grundkörper radial innen und/oder radial außen ringförmig erstreckt,
wobei der Grundkörper als Kern und Haut gebildet ist und der Grundkörper einen Hauptteil des Kerns aufweist,
wobei die mindestens eine Dichtlippe überwiegend aus Haut ausgebildet ist, indem lediglich ein Abschnitt des Kerns vom Grundkörper weg in den Anschlussbereich der im übrigen aus Haut ausgebildeten Dichtlippe hinein ragt,
wobei der Kern mindestens ein die Haut durchgreifendes Kernende aufweist, welches die Haut bis nach außen unter Ausbildung eines Durchbruchs durchgreift, wobei der Kern als geschlossen ringförmiger Kern ausgebildet ist,
dass die Dichtung durch Spritzgießen in einer Spritzgießform mit einer Kavität, die der äußeren Form der Dichtung entspricht, unter Einsatz der Sandwichtechnik hergestellt wird, wobei die Spritzgießform eine an die Kavität angrenzende Überlaufeinrichtung aufweist, über die die Ausbreitung der Hautkomponente und der Kernkomponente in bestimmten Bereichen der Kavität gesteuert wird, wobei zur Herstellung der Dichtung folgende Schritte ablaufen:
   a) in die Kavität der Spritzgießform wird im Bereich eines Einspritzortes Hautkomponente derart eingespritzt, dass sich die Hautkomponente in der Kavität fortschreitend erstreckt;
   b) in die die Hautkomponente enthaltende Kavität der Spritzgießform wird Kernkomponente derart eingespritzt, dass die Kernkomponente von der Hautkomponente zumindest teilweise umgeben in der Kavität fortschreitet;
   c) über die Überlaufeinrichtung wird die Ausbreitung der Hautkomponente und der Kernkomponente in bestimmten Bereichen der Kavität gesteuert, indem ein Teil der in der Kavität aufgenommenen Hautkomponente und Kernkomponente in die in einem Bereich der Formwandung der Kavität angrenzend angeordnete Überlaufeinrichtung aus der Kavität als Materialüberlauf überläuft.

Bei dem Spritzgießen in Sandwichtechnik ist wesentlich, dass die Kunststoffkomponenten als Schmelze nacheinander in die Kavität der Spritzgießform eingespritzt werden. In einem ersten Schritt wird die Hautkomponente eingespritzt. Sie erstreckt sich daraufhin in der Kavität fortschreitend. In einem folgenden Schritt wird die Kernkomponente in die Kavität eingespritzt. Die Kernkomponente schreitet sodann von der Hautkomponente zumindest teilweise umgeben in der Kavität fort. Es werden also mindestens zwei Komponenten nacheinander eingespritzt. Es kann in der Folge von der einen Komponente auch wieder auf die andere Komponente umgestellt werden, d.h. nach dem Einspritzen der ersten Komponente, gefolgt von dem Einspritzen der zweiten Komponente kann sodann wieder die erste Komponente und ggf. danach wieder die zweite Komponente usw. eingespritzt werden. Insbesondere ist es möglich, am Ende nochmal abschließend die erste Komponente einzuspritzen, um in der Kavität im Bereich der Einspritzstelle einen Abschluss mit der ersten Komponente, d.h. der Hautkomponente, zu erhalten. Ferner sind auch Ausführungen des Verfahrens möglich, bei denen mehr als zwei Komponenten, z.B. drei oder vier verschiedene Komponenten, nacheinander eingespritzt werden.

Mit dem erfindungsgemäßen Verfahren werden Dichtungen hergestellt, die zumindest abschnittsweise einen Kern aus einem harten Kunststoff und eine Haut aus einem vergleichsweise weichen Kunststoff aufweisen. Die in der vorliegenden Anmeldung verwendeten Begriffe "ein Kern aus hartem Kunststoff" und "eine Haut aus weichem oder vergleichsweise weichem Kunststoff" bedeuten, dass bei der fertigen Dichtung, wenn der Kunststoff nach dem Einspritzvorgang erstarrt ist, der Kern härter ist als die Haut. Die also unterschiedliche Härte von Haut und Kern kann durch verschiedene Maßnahmen erreicht werden. Zum einen ist es möglich, als Kunststoff der Haut und Kunststoff des Kerns chemisch entsprechend unterschiedliche Kunststoffe, z.B. entsprechend unterschiedliche Polymere, einzusetzen. Zum anderen ist es möglich, in die Kunststoffe Zusatzstoffe zuzugeben, wie Füllstoffe, z.B. Kugeln, Fasern usw., welche unterschiedliche Härte ergeben.

Wesentlich bei dem erfindungsgemäßen Verfahren ist, dass eine Überlaufeinrichtung in der Spritzgießform vorgesehen ist, mit der ein Materialüberlauf aus der Kavität möglich ist, d.h. die Überlaufeinrichtung ermöglicht es, Material, das in die Kavität eingespritzt ist, an bestimmten Stellen der Kavität wieder abzuführen, um auf diese Weise die Ausbreitung der in der Kavität eingespritzten Komponenten gezielt zu steuern. Über die Überlaufeinrichtung kann Hautkomponente und/oder Kernkomponente als Materialüberlauf abgeführt werden. Die Überlaufeinrichtung ist als Öffnung in der Formwandung der Kavität ausgebildet. Es können eine oder mehrere solche Überlaufeinrichtungen in der Formwandung der Kavität ausgebildet sein. Der Öffnung kann ein Formhohlraum nachgeschaltet sein, d.h. gewissermaßen eine separate Überlaufkavität kann in der Spritzgießform vorzugsweise angrenzend an die die herzustellende Dichtung bildende Kavität ausgebildet sein. In dieser Überlaufkavität, d.h. Überlaufform können auch mehrere Öffnungen, die die Überlaufeinrichtung bilden, münden. Das überlaufende Material bildet in dieser Überlaufform ein Überlaufgussstück, im folgenden auch Überlaufbohne genannt. Das Überlaufgussstück wird nach dem Spritzgießen, d.h. vor oder nach dem Entformen abgetrennt, ähnlich wie der Anguss. Die Überlaufeinrichtung kann anstelle von Überlaufkavitäten auch an der Überlauföffnung lediglich einen daran anschließenden Überlaufkanal aufweisen, der das überlaufende Material lediglich aus der Kavität abführt und ein stangenförmiges Überlaufgussstück bildet, welches entsprechend wie der Stangenanguss nach oder vor dem Entformen oder auch beim Entformen abgetrennt wird.

Die Überlaufeinrichtung kann als eine in der Spritzgießform stationäre passive Einrichtung, d.h. lediglich als Überlauföffnung mit anschließendem Überlaufformraum oder Überlaufkanal ausgebildet sein. Denkbar sind jedoch auch Ausführungen, bei denen die Überlaufeinrichtung aktiv ausgebildet ist, d.h. mit einer betätigbaren Einrichtung, die z. B. in Art eines Ventils ausgebildet sein kann, um die Überlauföffnung aktiv betätigt zu öffnen und zu schließen oder den Öffnungsquerschnitt aktiv veränderbar einzustellen. Zusätzlich oder alternativ kann die Überlaufeinrichtung auch mit einer kraftbetätigten Abzugseinrichtung, z. B. Saugeinrichtung ausgebildet sein, um das überlaufende Material entsprechend aktiv gesteuert abzuführen.

Über die Überlaufeinrichtung wird es jeweils möglich, die Ausbreitung der Hautkomponente und/oder der Kernkomponente in bestimmten Bereichen der Kavität zu steuern, so dass in den jeweiligen Bereichen der Kavität die Anordnung und Formgestaltung von Haut und Kern maßgeschneidert eingestellt werden kann. Erfindungsgemäß ist es vorgesehen, dass die Überlaufeinrichtung Hautkomponente im Bereich eines Zusammenflusses der Hautkomponente aufnimmt und dass die Überlaufeinrichtung Kernkomponente im Bereich eines Zusammenflusses der Kernkomponente aufnimmt.

Erfindungsgemäß ist vorgesehen, dass in die Überlaufeinrichtung Kernkomponente unter Ausbildung eines Durchbruchs des Kerns durch die an der Formwandung anliegende Haut austritt.

Erfindungsgemäß ist es vorgesehen, dass zur Herstellung einer Runddichtung an einem Ende der Kavität der Spritzgießform eine Überlaufeinrichtung angrenzend angeordnet ist, die den Zusammenfluss der Hautkomponente aufnimmt, um einen Zusammenfluss der Kernkomponente unter Ausbildung eines geschlossenen Kerns zu ermöglichen.

Bei bevorzugten Ausführungen kann vorgesehen sein, dass der Einspritzort in einem Bereich der Kavität ausgebildet ist, der zwischen zwei vergrößerten Hohlräumen der Kavität angeordnet ist.

Bei bevorzugten Ausführungen kann vorgesehen sein, dass an zwei gegenüberliegenden Enden der Kavität jeweils eine Überlaufeinrichtung angeordnet ist und vorzugsweise in einem Bereich der Kavität zwischen diesen gegenüberliegenden Enden der Einspritzort angeordnet ist.

Bei bevorzugten Ausführungen kann vorgesehen sein, dass die Überlaufeinrichtung eine Überlaufform oder mehrere Überlaufformen angrenzend an eine Formfläche der Kavität der Spritzgießform aufweist.

Bei den Dichtungen handelt es sich jeweils um eine Dichtung, die zumindest abschnittsweise einen Kern aus einem harten Kunststoff und eine Haut aus einem vergleichsweise weichen Kunststoff aufweist. Hierbei ist vorgesehen, dass die Dichtung mit dem Kern und der Haut durch in Sandwichtechnik Spritzgießen derart hergestellt ist, dass der Kern von der Haut weitgehend vollständig umschlossen ist, wobei der Kern mindestens ein die Haut durchgreifendes Kernende aufweist, welches die Haut bis nach außen unter Ausbildung eines Durchbruchs durchgreift.

Wesentlich bei dieser Dichtung ist es, dass sie durch Spritzgießen gemäß Sandwichtechnik hergestellt ist und dabei einen Kern und eine den Kern weitgehend vollständig umschließende Haut aufweist. Die Haut an der Außenseite der Dichtung kann mindestens eine Dichtlippe bilden. Wesentlich bei der Dichtung ist, dass der Kern mindestens ein die Haut durchgreifendes Kernende aufweist. Dies bedeutet, dass das Kernende die Haut bis nach außen unter Ausbildung eines Durchbruchs durchgreift und dabei vorzugsweise verengt zusammenlaufend ausgebildet ist. Mit dem erfindungsgemäßen Verfahren kann das Kernende in gezielter Weise mehr oder weniger weit in den Randbereich der Haut eingreifend ausgebildet werden, wodurch insbesondere die Festigkeit und Stabilität des Randbereichs der Dichtung eingestellt wird. Nicht nur der Randbereich, in welcher unmittelbaren Nähe die Überlaufeinrichtung in der Kavität angeordnet ist, sondern auch die übrigen Bereiche der Dichtung, vorzugsweise auch der weiter innenliegende Bereich, lässt sich über die Überlaufeinrichtung entsprechend steuern, d.h. die Anordnung und Formgestaltung von Haut und Kern kann in diesen weiteren Bereichen über die Überlaufform gezielt eingestellt werden. Erfindungsgemäß ist vorgesehen, dass das die Haut durchgreifende Kernende durch einen Durchbruch des Kerns an einer Materialüberlaufstelle der Kavität der Spritzgießform gebildet ist.

Die Runddichtung sieht vor, dass die Dichtung als Runddichtung ausgebildet ist, die einen ringförmigen Grundkörper mit radial innen und/oder radial außen ringförmig sich erstreckender Dichtlippe aufweist.

Die Längsdichtung sieht vor, dass die Dichtung als Längsdichtung ausgebildet ist, die einen gerade oder abgewinkelt sich erstreckenden platten- oder stabförmigen Grundkörper mit an mindestens einer Längsseite sich erstreckender Dichtlippe aufweist, wobei die Dichtlippe als längsgleitende Dichtlippe der Längsdichtung ausgebildet ist.

Die Abstreifdichtung sieht vor, dass die Dichtung als Abstreifdichtung ausgebildet ist, die einen gerade oder abgewinkelt sich erstreckenden platten- oder stabförmigen Grundkörper mit an mindestens einer Längsseite sich erstreckenden Dichtlippe aufweist, wobei die Dichtlippe als quergleitende Dichtlippe der Abstreifdichtung ausgebildet ist.

Bei den Dichtungen handelt es sich also um Dichtungen, die zumindest abschnittsweise einen Kern aus einem harten Kunststoff und eine Haut aus einem vergleichsweise weichen Kunststoff aufweisen. Es ist dabei vorgesehen, dass die Dichtung mit dem Kern und der Haut in Sandwichtechnik hergestellt ist und der Kern von der Haut weitgehend vollständig umschlossen ist. Bei der Sandwichtechnik handelt es sich um einen Prozess, bei welchem während des Einspritzens vom Hautmaterial auf das Kernmaterial umgestellt wird. Der Umschaltvorgang kann hierbei mit zwei aufeinander abgestimmten Einspritzfolgen von zwei separaten Einspritzzylindern geschehen, es kann jedoch auch eine Materialschichtung in einem einzigen Einspritzzylinder erfolgen, womit sich der Materialwechsel von Hautmaterial auf Kernmaterial zwangsläufig und automatisch ergibt.

Wesentlich bei der Anwendung der Sandwichtechnik ist, dass in einem ersten Schritt der weichere Kunststoff in die Kavität der Spritzgießform eingespritzt wird und in einem anschließenden zweiten Schritt der härtere Kunststoff in die Spritzgießform eingespritzt wird, und zwar in den in der Kavität der Spritzgießform bereits befindlichen noch plastischen weicheren Kunststoff hinein oder unmittelbar an diesen anschließend. Die so eingespritzten Kunststoffe füllen schließlich die Kavität vollständig aus und erstarren unter Ausbildung des Dichtungskörpers. Der härtere Kunststoff bildet dabei den härteren inneren Kern und der weichere Kunststoff bildet die äußere weiche Haut, die den Kern weitgehend vollständig umgibt.

Bei besonderen Ausführungen ist vorgesehen, dass der Kunststoff des Kerns eine größere Steifigkeit besitzt als der Kunststoff der Haut, z.B. indem der Kunststoff des Kerns chemisch anders als der Kunststoff der Haut ausgebildet ist. Durch die Wahl der Kunststoffe kann die Steifigkeit von Kern und Haut gezielt eingestellt werden. Es sind Ausführungen möglich, bei denen der Kunststoff des Kerns und/oder der Kunststoff der Haut aus einem oder mehreren Polymeren besteht und die betreffenden Polymere entsprechend ausgewählt sind. Es sind hierbei Ausführungen möglich, bei denen sowohl der Kunststoff des Kerns als auch der Kunststoff der Haut aus mehreren Polymeren zusammengesetzt ist. Die Zusammensetzung der Kunststoffe kann jeweils für den jeweiligen Anwendungsfall entsprechend ausgewählt und optimiert werden.

Es sind auch Ausführungen vorgesehen, bei denen der Kunststoff des Kerns und/oder der Kunststoff der Haut Füllstoffe als Verstärkung aufweisen bzw. aufweist, wobei die Füllstoffe von Fasern und Kugeln gebildet sind. Über die Art und Ausgestaltung der Füllstoffe sowie über die Konzentration der Füllstoffe kann eine entsprechende Verstärkung des Kunststoffs eingestellt werden. Es sind Ausführungen möglich, bei denen der Kern und die Haut unterschiedliche Füllstoffe und/oder unterschiedliche Konzentration an Füllstoffen aufweisen bzw. aufweist. Es sind hierbei besonders vorteilhafte Ausführungen möglich, bei denen der Kunststoff der Haut keine oder im Vergleich zum Kunststoff des Kerns nur eine vergleichsweise geringe Menge Füllstoffe aufweist. Auf diese Weise kann die Steifigkeit und Härte des Kerns bzw. die Weichheit der Haut eingestellt werden. Es sind bevorzugte Ausführungen möglich, bei denen der Kern und die Haut chemisch aus demselben Kunststoff, z.B. denselben Polymeren bestehen und die unterschiedliche Steifigkeit durch die Füllstoffe gebildet wird.

Es hat sich erwiesen, dass besonders zweckmäßige Ausführungen möglich sind, wenn der Kunststoff des Kernes eine größere Steifigkeit besitzt als der Kunststoff der Haut, indem zu diesem Zwecke unterschiedliche Kunststoffkomponenten eingesetzt werden. Es kann aber auch vorgesehen sein, dass der Kunststoff des Kernes Füllstoffe als Verstärkung aufweist. Der Kunststoff der Haut weist bei bevorzugten Ausführungen entweder überhaupt keine oder nur eine vergleichsweise geringe Menge Füllstoffe auf. Die Füllstoffe können von Fasern und/oder Kugeln wie Glasfasern, Kohlenstofffasern, Glaskugeln o. dgl. gebildet sein. Es ist somit möglich, dass bei der erfindungsgemäßen Dichtung der Kern und die Haut aus demselben Kunststoff bestehen. Der Kern und die Haut können dabei unterschiedliche Füllstoffe aufweisen.

Zur weiteren mechanischen Versteifung kann bei der Dichtung der Kern und/oder die Haut mit einem zumindest weitgehend im Inneren der Dichtung angeordneten formstabilen Träger kombiniert sein. Der formstabile Träger kann von dem Kern bzw. der Haut mindestens teilweise oder vollständig umschlossen sein. Zweckmäßig kann es hierbei sein, wenn der Kern und/oder die Haut mit dem formstabilen Träger materialschlüssig und/oder formschlüssig fest verbunden ist, z. B. mittels mindestens einer Verschlaufung. Derartige Verschlaufungen sind in der oben zitierten DE 10 2007 008 052 A1 der Anmelderin offenbart, so dass hierauf nicht detaillierter eingegangen zu werden braucht.

Die Dichtung kann auch mit einem zumindest weitgehend an der Außenseite der Dichtung angeordneten formstabilen harten Konstruktionsteil fest verbunden sein. Diese Verbindung kann durch Formschluss und/oder Materialschluss realisiert sein. Das formstabile harte Konstruktionsteil kann hierbei mit der Haut und/oder dem Kern der Dichtung formschlüssig bzw. materialschlüssig fest verbunden sein. Die Verbindung kann z. B. durch mindestens eine Verschlaufung realisiert sein.

Die Dichtung und das formstabile Konstruktionsteil können durch Mehrkomponenten-Spritzgießen hergestellt sein.

Die mit der Erfindung erzielten Vorteile bestehen darin, dass die Dichtung durch Spritzgießen in Sandwichtechnik zwei voneinander verschiedene Funktionsbereiche, d.h. einen formstabilen Trägerbereich und einen elastischen Dichtbereich, aufweist. Durch die erfindungsgemäß zur Anwendung gelangende Sandwichtechnik sind optimale Dichtungs- und Trägereigenschaften insbesondere durch die Verwendung unterschiedlicher Werkstoffe und/oder Füllstoffe für das Hautmaterial und für das Kernmaterial realisierbar. Der Dichtbereich ist mit dem Kern- bzw. Trägerbereich fest und unlösbar verbunden. Unerwünschte Durchlässigkeiten zwischen der den Dichtbereich bestimmenden Haut und dem Kern beispielsweise durch Temperatur-Einwirkungen und/oder Chemikalien werden vermieden. Durch die zur Anwendung gelangende Sandwichtechnik sind Dichtungen mit sehr geringen Bauhöhen in einfacher Weise realisierbar. Der Trägerbereich und der Dichtbereich schließen aneinander quasi direkt und unmittelbar an, d.h. der Dichtbereich kann sehr nahe an den Trägerbereich herangeführt sein, wodurch die Dichtwirkung optimal unterstützt wird. Ein weiterer Vorteil besteht darin, dass keine Gefahr abrasiver Wirkungen im Bereich der beispielsweise mindestens eine Dichtlippe aufweisenden Haut von den für die Trägerfunktion des Kernes notwendigen Füllstoffen des Kernmaterials besteht. Es ist eine saubere Trennung von optimalem Werkstoff für die Dichtungsfunktion und optimalem Werkstoff für die Trägerfunktion des Kernes bei einer optimalen Reduktion, d.h. Minimalanzahl von Bauteilen, bei gleichzeitiger Vermeidung aufwendiger Bauweisen gewährleistet.

Bei den diversen Ausführungen können als Kunststoffe alle thermoplastisch verarbeitbaren Formmassen eingesetzt werden, z. B. Polyamide oder thermoplastische Elastomere, d.h. wenn in der vorliegenden Anmeldung von Kunststoffen die Rede ist, sind damit auch alle anderen thermoplastisch verarbeitbaren Formmassen umfasst.

Bei den diversen Ausführungen ist vorgesehen, dass der Kern von der Haut weitgehend vollständig umschlossen ist. Um insbesondere bei ringförmigen Dichtelementen eine stabile Verbindung an Materialzusammenflußstellen zu erhalten, ist gezielt vorgesehen, dass ein Durchbruch des harten Kunststoffs des Kerns durch den Kunststoff der Haut derart vorliegt, dass lokal begrenzt der harte Kunststoff des Kerns an der Außenseite der Dichtung angeordnet ist, und zwar vorzugsweise nur an einer dem Dichtbereich abgewandten Seite der Dichtung. Es ist vorgesehen, dass der Durchbruch an einer bei der Fertigung auftretenden Materialzusammenflussstelle des Kunststoffs der Haut vorliegt. Bei ringförmigen Dichtungen kann dieser lokal begrenzte harte Kunststoffbereich am äußeren Rand der Dichtung vorliegen und der innere Rand der Dichtung als weicher Dichtbereich ausgebildet sein oder es kann die Anordnung auch umgekehrt vorgesehen sein.

Verwendung finden kann die erfindungsgemäße Dichtung als Dichtungselement für diverse Führungseinrichtungen z. B. Linearführungen und Drehlager vorzugsweise jeweils mit Wälzkörpern. Die erfindungsgemäße Dichtung kann in diversen Lagern, vorzugsweise Wälzlagern, Verwendung finden. Es kann sich hierbei um Lagereinrichtungen handeln, die als Drehlager oder als Linearlager ausgebildet sein können.

Bei den Drehlagern kann vorgesehen sein, dass das Dichtelement als ringförmiger und/oder flachringförmiger Körper ausgebildet ist und die Haut des radial inneren Randes des Körpers und/oder die Haut des radial äußeren Randes des Körpers als der Dichtbereich ausgebildet ist.

Bei den Linearlagern können eine oder mehrere der Dichtungen als Abstreifdichtung ausgebildet sein. Es kann hierbei vorgesehen sein, dass das Dichtelement als Abstreifdichtung ausgebildet ist, die einen flachen, vorzugsweise lappenförmigen Körper aufweist, der sich parallel zu einer Stirnseite des Laufwagens und/oder senkrecht zur Bewegungsrichtung des Laufwagens erstreckt, wobei die Haut eines freien Randbereichs des Körpers auf einer parallel zur Bewegungsrichtung des Laufwagens sich erstreckenden Fläche der Schiene quer zur Längserstreckung des freien Randbereichs des Körpers gleitend geführt ist.

Ferner können in den Linearlagern auch Längsdichtungen eingesetzt sein. Hierbei kann vorgesehen sein, dass das Dichtelement als Längsdichtung ausgebildet ist, die einen flachen, vorzugsweise lappenförmigen Körper aufweist, der sich parallel zur Bewegungsrichtung des Laufwagens erstreckt, wobei die Haut eines freien Randbereichs des Körpers auf einer Fläche der Schiene entlang der Erstreckungsrichtung der Schiene und längs zur Längserstreckung des freien Randbereichs des Körpers gleitend geführt ist.

Bei all den Ausführungen des Wälzlagers können als Wälzkörper Kugeln, Zylinderkörper, Nadeln oder andere an sich bekannte Wälzkörper eingesetzt werden.

Weitere Einzelheiten, Merkmale und Vorteile ergeben sich aus der nachfolgenden Beschreibung einiger in den Zeichnungen schematisch verdeutlichter Ausbildungen der erfindungsgemäßen Dichtung, wobei es sich versteht, dass die Erfindung nicht auf die dargestellten Ausführungsformen beschränkt, sondern durch die Ansprüche bestimmt ist.

Es zeigen:
- Figur 1: schematisch einen Querschnitt durch eine Ausbildung der nicht erfindungsgemäßen Dichtung,
- Figur 2: eine der Figur 1 ähnliche Querschnittsdarstellung einer zweiten nicht erfindungsgemäßen Ausführungsform der Dichtung, jedoch mit modifizierter Dichtlippe und mit im Innenraum der Dichtung angeordnetem formstabilen Träger,
- Figur 3: eine perspektivische Ansicht einer dritten nicht erfindungsgemäßen Ausführungsform der erfindungsgemäßen Dichtung, ebenfalls mit im Inneren angeordnetem formstabilem Träger, wobei jedoch die Verbindungseinrichtung über Verschlaufung gezeigt ist,
- Figur 4: einen Querschnitt durch eine vierte nicht erfindungsgemäße Ausführungsform der erfindungsgemäßen Dichtung, jedoch mit einem außenliegenden formstabilen harten Konstruktionsteil verbunden,
- Figur 5: perspektivisch einen Abschnitt der in Fig. 4 dargestellten Ausführungsform, wobei die Verbindung zwischen der Dichtung und dem außenliegendem formstabilen harten Konstruktionsteil über Verschlaufung gezeigt ist,
- Fig. 6a: eine Schnittansicht eines Ausführungsbeispiels einer als Drehlager ausgebildeten Lagereinheit mit nicht erfindungsgemäßer ringförmiger Runddichtung;
- Fig. 6b: eine Schnittansicht eines nicht erfindungsgemäßen Ausführungsbeispiels mit ähnlichem Aufbau wie in Figur 6a, jedoch mit Schnittdarstellung durch die Runddichtung Kern und Haut zeigend;
- Fig. 6c: eine Schnittansicht eines Ringabschnitts einer nicht erfindungsgemäßen ringförmigen Runddichtung mit ähnlichem Aufbau wie in den Figuren 6a und 6b, Schnittebene quer zur Ringebene;
- Fig. 7a: eine perspektivische Darstellung eines nicht erfindungsgemäßen Ausführungsbeispiels einer als Linearlager ausgebildeten Lagereinheit, teilweise geschnitten im Bereich des rechten Teils des Laufwagens;
- Fig. 7b: eine Detaildarstellung in Bereich VIIb in Figur 7a, die freigeschnittene Längsichtung und Walzkugelführung zeigend;
- Fig. 7c: eine Detaildarstellung im Bereich VIIc in Figur 7a, die freigeschnittene Abstreifdichtung zeigend;
- Fig. 7d: eine Schnittansicht einer modifizierten Ausführung einer nicht erfindungsgemäßen Abstreifdichtung;
- Fig. 8a-8f: Schnittdarstellungen von sechs Ausführungsbeispielen eines Laufwagens mit nicht erfindungsgemäßer Längsdichtung, wobei sich die Ausführungsbespiele in der Fixierungseinrichtung der Längsdichtung unterscheiden;
- Fig. 9a: eine Schnittansicht einer erfindungsgemäßen ringförmigen Runddichtung mit im wesentlichen gleichem Aufbau wie die Runddichtung in Figur 6c, jedoch Schnittebene parallel zur Ringebene und mit Überlaufbohne dargestellt;
- Fig. 9b: eine schematische Schnittdarstellung einer Fertigungseinrichtung zum Spritzgießen einer erfindungsgemäßen Runddichtung in Sandwichtechnik mit einer Spritzgießform mit Kavität für die Runddichtung und einer über einen Angusskanal mit Angießbuchse verbundene Sandwichplatte mit Nadelverschlusseinrichtung und Einlasskanal für die Hautkomponente und Einlasskanal für die Kernkomponente, während des Einspritzens der Hautkomponente;
- Fig. 9c: eine Darstellung der Fertigungseinrichtung in 9b, jedoch während des Einspritzens der Kernkomponente;
- Fig. 10a: eine Figur 9a entsprechende Darstellung einer erfindungsgemäßen ringförmigen Ringdichtung;
- Fig. 10b: eine Figur 9b entsprechend der Darstellung einer Fertigungseinrichtung zum Spritzgießen einer erfindungsgemäßen ringförmigen Runddichtung während des Einspritzens der Hautkomponente, wobei jedoch im Unterschied zu Fig. 9b die Anspritzung nicht stirnseitig am äußeren Kopfabschnitt des Querschnitts der Dichtung wie in Fig. 9b, sondern mittig zwischen dem äußeren und dem inneren Kopfabschnitt des Querschnitts erfolgt;
- Fig. 10c: eine Darstellung der Fertigungseinrichtung in Fig. 10b, jedoch während des Einspritzens der Kernkomponente;
- Fig. 11a: eine Figur 9a und 10a entsprechende Darstellung einer nicht erfindungsgemäßen ringförmigen Runddichtung, wobei jedoch keine Überlaufbohne vorgesehen ist und der Kern nicht als geschlossener Ring ausgebildet ist;
- Fig. 11b: eine Fig. 10b entsprechende Darstellung einer Fertigungseinrichtung zum Einspritzgießen einer nicht erfindungsgemäßen ringförmigen Runddichtung während des Einspritzens der Hautkomponente, wobei jedoch im Unterschied zu Fig. 10b die Kavität keine Überlaufeinrichtung aufweist;
- Fig. 11c: eine Darstellung der Fertigungseinrichtung in Fig. 11b, jedoch während des Einspritzens der Kernkomponente;
- Fig. 12a: eine Schnittansicht einer erfindungsgemäßen Längsdichtung, z. B. für den Einsatz in einem Linearlager in Fig. 7a bzw. 7b, wobei die Längsdichtung beidseitig eine Überlaufbohne aufweist, Schnittebene quer zur flächigen Erstreckungsebene der Längsdichtung;
- Fig. 12b: eine schematische Schnittdarstellung einer Fertigungseinrichtung zum Spritzgießen einer erfindungsgemäßen Längsdichtung in Sandwichtechnik mit einer Spritzgießform mit Kavität für die Längsdichtung und einer über einen Angusskanal mit Angießbuchse verbundenen Sandwichplatte mit Nadelverschlusseinrichtung und Einlasskanal für die Hautkomponente und Einlasskanal für die Kernkomponente, mit mittiger Anspritzung und beidseitiger Überlaufeinrichtung, während des Einspritzens der Hautkomponente;
- Fig. 12c: eine Darstellung der Fertigungseinrichtung in Figur 12b, jedoch während des Einspritzens der Kernkomponente;
- Fig. 13a: eine Fig. 12a entsprechende Schnittansicht einer nicht erfindungsgemäßen Längsdichtung jedoch ohne Überlaufbohne;
- Fig. 13b: eine Fig. 12b entsprechende Darstellung einer Fertigungseinrichtung zum Spritzgießen einer nicht erfindungsgemäßen Längsdichtung in Sandwichtechnik, während des Einspritzens der Hautkomponente, wobei jedoch die Kavität der Spritzgießform keine Überlaufeinrichtung aufweist;
- Fig. 13c: eine Darstellung der Fertigungseinrichtung in Fig. 13b, jedoch während des Einspritzens der Kernkomponente;
- Fig. 14a: eine Fig. 13a entsprechende Schnittansicht einer erfindungsgemäßen Längsdichtung, jedoch mit nur einer Überlaufbohne und einer gegenüberliegenden stirnendseitigen Anspritzstelle;
- Fig. 14b: eine Fig. 12b entsprechende Darstellung einer Fertigungseinrichtung zum Spritzgießen einer erfindungsgemäßen Längsdichtung in Sandwichtechnik, während des Einspritzens der Hautkomponente, wobei jedoch die Anspritzung am Stirnende erfolgt und am gegenüberliegenden Stirnende der Kavität eine Überlaufeinrichtung angeordnet ist;
- Fig. 14c: eine Darstellung der Fertigungseinrichtung in Fig. 14b, jedoch während des Einspritzens der Kernkomponente;
- Fig. 15a: eine Fig. 14a entsprechende Schnittansicht einer nicht erfindungsgemäßen Längsdichtung, jedoch ohne Überlaufbohne;
- Fig. 15b: eine Fig. 14b entsprechende Darstellung einer Fertigungseinrichtung zum Spritzgießen einer nicht erfindungsgemäßen Längsdichtung in Sandwichtechnik, während des Einspritzens der Hautkomponente, wobei jedoch die Kavität keine Überlaufeinrichtung aufweist;
- Fig. 15c: eine Darstellung der Fertigungseinrichtung in Fig. 15b, jedoch während des Einspritzens der Kernkomponente;
- Fig. 16a: eine schematische Darstellung der Kavität einer Spritzgießform für eine erfindungsgemäße Abstreifdichtung mit der Spritzgießform mit jeweils einer Überlaufeinrichtung am Stirnende des rechten Schenkels und des linken Schenkels der Kavität und mittiger Anspritzung, während des Einspritzens der Hautkomponente;
- Fig. 16b: eine Darstellung der Spritzgießform in Fig. 16a, jedoch während des Einspritzens der Kernkomponente;
- Fig. 16c: eine Darstellung der Spritzgießform in Fig. 16b, jedoch am Ende des Einspritzvorgangs;
- Fig. 17a: eine Fig. 16a entsprechende Darstellung der Kavität einer Spritzgießform für eine nicht erfindungsgemäße Abstreifdichtung, während der Einspritzung der Hautkomponente, jedoch ohne Überlaufeinrichtung an den Stirnenden der beiden Schenkel der Kavität;
- Fig. 17b: eine Darstellung der Spritzgießform in Fig. 17a, jedoch während der Einspritzung der Kernkomponente;
- Fig. 17c: eine Darstellung der Spritzgießform in Fig. 17b, jedoch am Endes des Einspritzvorgangs;
- Fig. 18a: eine Figur 16a entsprechende Darstellung der Kavität einer Spritzgießform für eine erfindungsgemäße Abstreifdichtung jedoch mit Anspritzung am Stirnende des einen Schenkels und Überlaufeinrichtung am Stirnende des anderen Schenkels der Kavität während der Einspritzung der Hautkomponente;
- Fig. 18b: eine Darstellung der Spritzgießform in Fig. 18a während des Einspritzvorgangs der Kernkomponente;
- Fig. 18c: eine Figur 18b entsprechende Darstellung, jedoch am Ende des Einspritzvorgangs;
- Figur 19a: eine perspektivische Ansicht eines nicht erfindungsgemäßen Ausführungsbeispiels einer als abdichtender Stopfen ausgebildeten Dichtung;
- Figur 19b: eine diametrale Schnittansicht der Dichtung in Figur 19a in eingesetzter Position als abdichtender Stopfen in einer Öffnung einer Wand eines nicht näher dargestellten Bauteils;
- Figur 20a: eine perspektivische Ansicht eines Ausführungsbeispiels einer als abdichtende Kappe ausgebildeten nicht erfindungsgemäßen Dichtung;
- Figur 20b: eine diametrale Schnittansicht der Dichtung in Figur 20a in eingesetzter Position als abdichtende Schutzkappe im Bereich der Nabe einer nicht näher dargestellten Laufrolle;
- Figur 21a: eine Schnittansicht eines Auslasses eines Luftzuführungsschachtes mit Horizontal- und Vertikallamellen als nicht erfindungsgemäße Ausführungsbeispiele der Dichtung;
- Figur 21b: eine Schnittansicht entlang Schnittlinie B-B in Figur 21a, die Vertikallamelle alleine zeigend;
- Figur 22a: eine Frontansicht eines Fensters mit einer Fensterscheibendichtung als nicht erfindungsgemäßes Ausführungsbeispiel der Dichtung;
- Figur 22b: eine perspektivische Ansicht einer entlang Schnittlinie B-B in Figur 20a geschnittenen Fensterscheibendichtung.

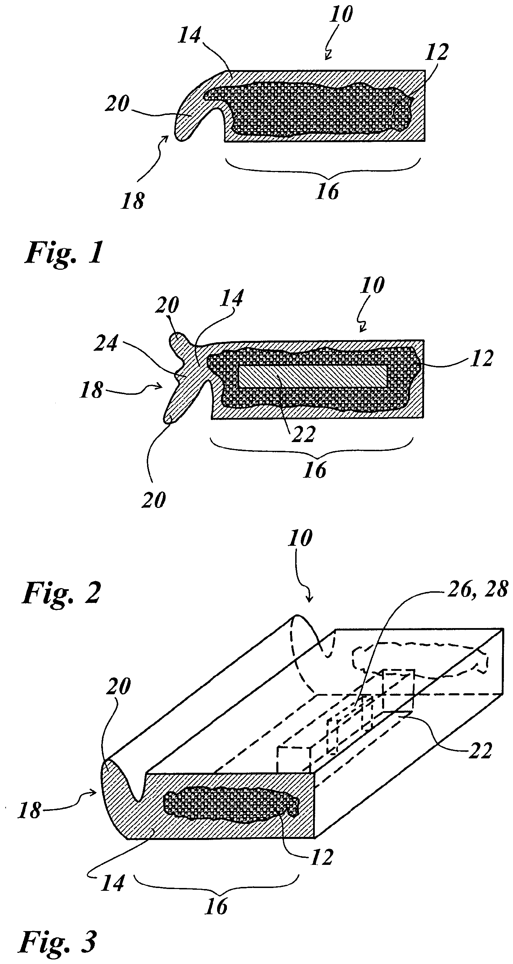

**Figur 1** zeigt in einer Querschnittsdarstellung eine Ausbildung der Dichtung 10, die einen Kern 12 und eine den Kern umschließende Haut 14 aufweist. Der Kern 12 besteht aus einem harten Kunststoff. Die Haut 14 besteht aus einem im Vergleich hierzu weichen Kunststoff. Der Kern 12 und die Haut 14 sind in einem Arbeitsgang in der, wie vorne erwähnt, an sich bekannten Sandwichtechnik hergestellt.

Die Dichtung 10 weist einen Trägerbereich 16 und einen Dichtbereich 18 auf. Der Dichtbereich 18 ist als Dichtlippe 20 ausgebildet, die vom Trägerbereich 16 einstückig weg steht. Der Trägerbereich 16 ist bezüglich seiner mechanischen Festigkeit und Formstabilität durch den Kern 12 aus dem harten Kunststoff bestimmt. Der von der Dichtlippe 20 gebildete Dichtbereich 18 ist von der Haut 14 aus dem vergleichsweise weichen Kunststoff bestimmt.

Die Dichtung 10 in Figur 1 bildet, wie erkennbar, einen Körper, der aus einem Kern 12 und eine den Kern 12 umgebende Haut 14 besteht. Dieser Körper der Dichtung gliedert sich im Falle des Ausführungsbeispiels in Figur 1 in einen im Querschnitt im wesentlichen rechteckigen Grundkörper und einer daran anschließenden Dichtlippe 20. Der im Querschnitt rechteckige Grundkörper stellt den oben genannten Trägerbereich 16 dar. Der Grundkörper wird im wesentlichen durch den Kern 12 gebildet, der im Querschnitt entsprechend rechteckig ausgebildet ist. Er ist von einer relativ dünnen Schicht Haut 14 überzogen, wobei jedoch auf der einen kurzen Seite des Rechteckquerschnitts des Grundkörpers die Haut als dickere Dichtlippe 20 ausgebildet ist. Die Dichtlippe ist bei dem Ausführungsbeispiel in Figur 1 als im Querschnitt im wesentlichen dreieckiger Zapfen oder entsprechende Leiste ausgebildet, der bzw. die winkelig zur kurzen Rechteckseite des Grundkörperquerschnitts nach außen auskragt. Die Dichtlippe ist kernlos, d.h. ausschließlich aus Haut ausgebildet, wobei lediglich im Anschlussbereich an den Grundkörper der im Querschnitt im wesentlichen rechteckige Kern eine Anschlussnase oder Anschlussleiste aufweist, die in die Dichtlippe hineinragt und dort einen Verstärkungsbereich der Dichtlippe bildet, der die Dichtlippe in ihrer Position und Festigkeit stabilisiert.

**Figur 2** verdeutlicht in einer der Figur 1 ähnlichen Querschnittsdarstellung eine Ausbildung der Dichtung 10 mit einem Kern 12 aus hartem Kunststoff und einer den Kern 12 umgebenden Haut 14 aus einem vergleichsweise weichen Kunststoff, wobei in diesem Fall der Kern 12 mit einem formstabilen Träger 22 kombiniert ist. Das heißt, der formstabile Träger 22 ist innenliegend im Kern 12 angeordnet. Der formstabile Träger 22 ist beispielsweise von einem Blechmaterial gebildet.

Mit der Bezugsziffer 16 ist auch in Figur 2 der Trägerbereich der Dichtung 10 und mit der Bezugsziffer 18 der Dichtbereich der Dichtung 10 bezeichnet. Bei dieser Ausführungsform in Figur 2 weist der elastische Dichtbereich 18 zwei voneinander abgewandte Dichtlippen 20 und zwischen diesen einen Verstärkungswulst 24 auf. Auch bei diesem Ausführungsbeispiel gliedert sich der Körper der Dichtung 10 in einen im Querschnitt im wesentlichen rechteckigen Grundkörper bestehend aus einem Kern, der von einer relativ dünnen Hautschicht überzogen ist, wobei in entsprechender Weise an der kurzen Querschnittsseite des Grundkörpers die Haut als dickere Dichtlippe 20 ausgebildet ist. Im Unterschied zu dem Ausführungsbeispiel in Figur 1 ist die Dichtlippe 20, wie oben erwähnt, nicht als einfache Dichtlippe ausgebildet, sondern besteht aus zwei voneinander abgewandten Dichtlippen 20, zwischen denen eine Verstärkungswulst 24 ausgebildet ist. Ein weiterer Unterschied zu dem Ausführungsbeispiel in Figur 1 besteht in Figur 2 darin, dass der Kern in seinem Inneren den formstabilen Träger 22 aufweist. Dieser formstabile Träger 22 wird von dem Kern im Querschnitt betrachtet vollständig umgeben.

**Figur 3** verdeutlicht perspektivisch eine Ausbildung der Dichtung 10 mit einem Kern 12 und einer diesen umgebenden Haut 14. In dem Kern 12 aus hartem Kunststoff ist ein formstabiler Träger 22 angeordnet, der mit einer Aussparung 26 ausgebildet ist, um zwischen dem Kern 12 und dem formstabilen Träger 22 eine Verschlaufung 28 zu realisieren. Im Übrigen ist die Dichtung 10 gemäß Figur 3 ähnlich ausgebildet wie die Dichtung 10 gemäß Figur 1.

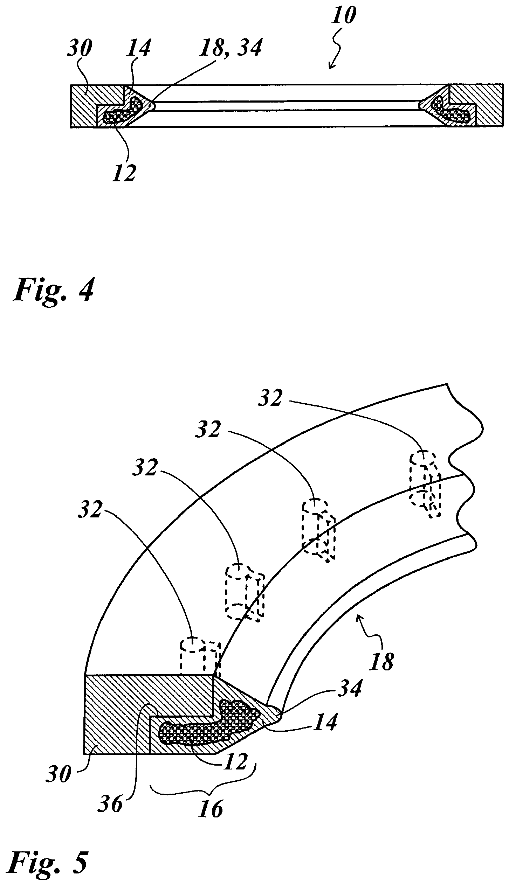

Während Figur 3 eine geradlinige Dichtung 10 zeigt, die für eine Linearführung vorgesehen ist, zeigen die **Figuren 4 und 5** eine Dichtung 10, die ringförmig ausgebildet und für ein als Drehlager ausgebildetes Wälzlager vorgesehen ist. Die Dichtung 10 ist in diesem Fall mit einem formstabilen außenliegenden Konstruktionsteil 30 fest verbunden. Die feste Verbindung ist beispielsweise durch Verschlaufungen 32 verwirklicht, von welchen einige in der vergrößerten Darstellung in Figur 5 gezeichnet sind.

Auch die ringförmige Dichtung 10 in den Figuren 4 und 5 weist einen Kern 12 aus einem harten Kunststoff und eine den Kern 12 umschließende Haut 14 aus einem vergleichsweise weichen Kunststoff auf. Auch bei dieser Ausführung ist der Kern und die Haut 14 in an sich bekannter Sandwichtechnik hergestellt. In dem dargestellten Ausführungsbeispiel ist die Haut 14 an der radialen Innenseite der Dichtung mit einem ringförmig umgebenden Dichtungswulst 34 ausgebildet, der den Dichtbereich 18 der Dichtung 10 bildet. Der Grundkörper besteht im wesentlichen aus einem Kern 12 überzogen von einer relativ dünnen Schicht Haut 14. Er bildet den Trägerbereich 16, an den sich der Dichtbereich 18 in Form der einen Dichtlippe unmittelbar anschließt. Der Grundkörper ist bezüglich mechanischer Festigkeit und Formstabilität insbesondere durch den Kern 12 aus dem harten Kunststoff bestimmt. Ein wesentlicher Unterschied zu den vorangehenden Ausführungsformen der Figuren ist, dass bei dem Ausführungsbeispiel in den Figuren 4 und 5 der Kern 12 im Querschnitt nicht im wesentlichen rechteckförmig ist, sondern sich aus einem Rechteckabschnitt und einem verbreiterten Kopfabschnitt zusammensetzt. Der Rechteckabschnitt ist im Grundkörper angeordnet. Der verbreiterte Kopfabschnitt ist in dem Anschlussbereich der Dichtlippe in das Innere der Dichtlippe hineinragend angeordnet. Dieser verbreitete Kopfabschnitt stabilisiert diese radial innere Dichtlippe hinsichtlich ihrer mechanischen Festigkeit, Form und Position. Er ist in einem relativ breiten Übergangsbereich zwischen dem Grundkörper und der Dichtlippe angeordnet und bildet einen Fortsatz des im Querschnitt rechteckigen Grundkörpers, der in der Aufnahme-Ringstufe des außenliegenden formstabilen Konstruktionsteils 30 aufgenommen ist.

Zur Realisierung der Verschlaufungen 32 zwischen der Dichtung 10 und dem formstabilen Konstruktionsteil 30 weisen das Konstruktionsteil 30 und der Trägerbereich 16 der Dichtung 10 im Bereich der Aufnahme eine zueinander komplementäre Ringstufe auf. Aufgrund dessen, dass die Dichtung mit ihrem Grundkörper dort aufgenommen ist, ergibt sich zwischen dem Konstruktionsteil 30 und der Dichtung 10 ein Überlappungsbereich 36. In diesem Bereich sind die Verschlaufungen 32 ausgebildet.

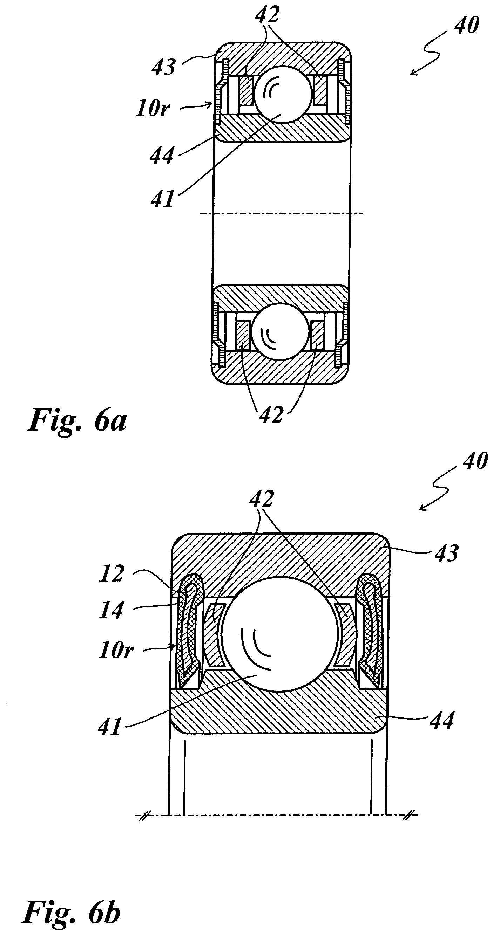

**Fig. 6a** zeigt eine als Drehlager ausgebildete Lagereinheit. Bei dem Drehlager handelt es sich um ein Wälzlager 40 mit einem als Außenring 43 ausgebildeten ersten Lagerteil und einem als Innenring 44 ausgebildeten zweiten Lagerteil, wobei die beiden Lagerteile unter Zwischenschaltung von Wälzkörpern 41 an diesen geführt relativ zueinander bewegbar sind. Die in dem in Fig. 6a gezeigten Ausführungsbeispiel als Kugeln ausgebildeten Wälzkörper 41 sind durch einen Wälzkörperkäfig 42 auf Abstand gehalten. In den beiden axialen Endabschnitten des Außenrings 43 sind ringförmige Runddichtungen 10r als Wälzlagerdichtungen angeordnet, wobei die Runddichtungen 10r, wie die weiter oben beschriebenen Dichtungen 10 im Sandwichverfahren hergestellt, einen durch den harten Kern gebildeten Trägerbereich und eine durch die weiche Haut gebildeten Dichtbereich aufweisen. Dieser konkrete Querschnittsaufbau der Dichtung 10r mit Kern und Haut ist in der Querschnittdarstellung in Figur 6a nicht dargestellt. In Figur 6a ist jedoch gut zu erkennen, wie die Wälzlagerdichtungen 10r den zwischen dem Außenring 43 und dem Innenring 44 ausgebildeten Spaltbereich überdecken. Sie sind in einer Ringnut im Außenring 43 eingesteckt und fixiert und gleiten mit ihrem als weicher Dichtbereich ausgebildeten radial inneren ringförmigen Abschnitt auf einem korrespondierenden stirnseitigen Bereich des Innenrings 44.

Die mögliche Querschnittsgestaltung der in Figur 6a eingesetzten ringförmigen Runddichtung 10 ist in **Figur 6b** exemplarisch gezeigt. Figur 6b zeigt ein Drehlager, das im Prinzip gleich aufgebaut ist, wie das in Figur 6a dargestellte Drehlager, nämlich mit einem äußeren Lagerring 43 und einem inneren Lagerring 44, die relativ zueinander drehbar sind, mit zwischengeschalteten Wälzkugeln 41 in einem Wälzkugelkäfig 42. Beiderseits des Wälzkugelkäfigs 42 ist eine als ringförmige Runddichtung 10r ausgebildete Wälzlagerdichtung angeordnet bzw. jeweils eingesetzt in einer Ringnut im Aufnahmering 43. Aus der Querschnittsdarstellung in Figur 6b ergibt sich, dass die Dichtung 10r gleich wie die in den Figuren 1 bis 5 dargestellten Dichtungen einen inneren harten Kern 12 und eine äußere den Kern umgebende weichere Haut 14 aufweist. Der in Figur 6b dargestellte Querschnitt des Ringabschnitts dieser Runddichtung weist einen im wesentlichen hantelförmigen Querschnitt auf mit einem radial äußeren und einem radial inneren verbreiterten Kopfabschnitt und einem engeren Verbindungsabschnitt, der die beiden Kopfabschnitte verbindet. In diesem im Querschnitt im wesentlichen hantelförmigen Körper der Dichtung ist der entsprechend hantelförmige Kern 12 angeordnet. Der radial äußere verbreiterte Kopfabschnitt der Dichtung bildet einen Fixierungsabschnitt, der in der Ringnut des Außenrings 43 eingepresst und formschlüssig aufgenommen ist. Über die radial nach außen gerichtete Spannung der ringförmigen Dichtung 10w wird ein fester Halt des Fixierungsabschnitts in der Ringnut erhalten, unterstützt durch den Formschluss des Kopfabschnitts in der zur Form des Kopfabschnitts komplementär ausgebildeten Ringnut. Bei Weiterbildungen kann die Ringnut im Querschnitt hinterschnitten ausgebildet sein, um einen verrasteten Formschluss der Dichtung in der Ringnut zu erhalten. Wesentlich ist, dass in dem Bereich des Fixierungsabschnitts der Dichtung ein entsprechend verbreiteter Kopfabschnitt des Kerns 12 angeordnet ist. Durch die Härte des Kerns wird ein fester stabiler Sitz in der Ringnut erhalten.

Am radial inneren Ende des Querschnitts ist die Dichtlippe ausgebildet, die, wie in Figur 6b erkennbar, in ihrem kernlosen äußeren Randbereich auf dem Innenring 44 gleitend geführt ist. Ein wesentlicher Vorteil ergibt sich bei dieser Ausführungsform der Dichtung 10r in Figur 6b dadurch, dass der Kern 12 sich weitgehend über die gesamte Querschnittslänge in der Dichtung erstreckt. Der verbreiterte radial äußere Kopfabschnitt sorgt für eine Befestigung des Fixierungsabschnitts in der Ringnut. Der radial innere verbreiterte Kopfabschnitt stellt eine Verstärkung und Stabilisierung der ringförmigen Dichtlippe dar, ohne dass der verbreiterte Kopfabschnitt bis in den radial äußeren aus Haut bestehenden Rand der Dichtung, der die gleitende Dichtlippe bildet, hineinragt. Der Verbindungsabschnitt des Kerns, welcher die beiden verbreiterten Kopfabschnitte miteinander verbindet, sorgt für eine stabile Lage des Verbindungsabschnitts der Dichtung, der in dieser stabilen Lage die in dem Kugelkäfig angeordneten Wälzkugeln gegen Verschmutzung und Beschädigung abdeckt und schützt und gleichzeitig Schmiermittel und/oder Öle im Umlaufsystem hält.

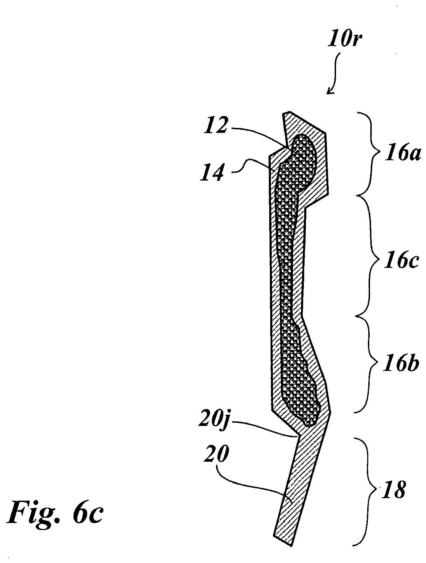

Eine weitere optimierte Ausführungsform einer ringförmigen Runddichtung 10r für den Einsatz in einem Wälzdrehlager in Figur 6a ist in **Figur 6c** dargestellt. Figur 6 zeigt den Querschnitt eines Ringabschnitts der Runddichtung 10r. Die Ausführungsform unterscheidet sich von der in Figur 6b darin, dass mit Figur 6c die Dichtlippe 20 als vollständig kernloser Fortsatz des Grundkörpers der Dichtung ausgebildet ist. Dieser kernlose verjüngte Fortsatz, der in seiner Gesamtheit die Dichtlippe bildet, ist in einem spitzen Winkel schräg von dem im Querschnitt hantelförmigen Grundkörper der Dichtung auskragend und weist über seine gesamte auskragende Strecke im wesentlichen konstante Dicke auf. Die Dichtlippe gleitet mit ihrem radial inneren Rand auf dem Innenring 44, wenn das Drehlager dreht. Der hantelförmige Grundkörper der Dichtung weist in entsprechender Weise wie der Grundkörper bei der ringförmigen Runddichtung in Figur 6b einen radial inneren verbreiterten Kopfabschnitt zur Stabilisierung der Dichtlippe und einen radial äußeren Kopfabschnitt als Fixierungsabschnitt zur Aufnahme in der Ringnut auf. Der Verbindungsabschnitt, der die verbreiterten Kopfabschnitte der Runddichtung verbindet, weist einen die Kopfabschnitte des Kerns verbindenden Kernabschnitt auf und ist damit in der Lage, die Ausrichtung der Dichtung 10r in der eingesetzten Stellung im Drehlager zu stabilisieren und eine sichere Abdeckung der in dem Wälzkugelkäfig laufenden Wälzkugeln sicherzustellen. Die in Figur 6c dargestellte Runddichtung 10r gliedert sich damit in ihrem Querschnitt in die folgenden Abschnitte, die auch in Figur 6c eingezeichnet sind, nämlich einen Nutbefestigungsabschnitt 16a mit verbreitertem Kern, einen Wälzkörperabdeckungsabschnitt, der zusammengesetzt ist aus den Abschnitten 16c mit schmalem Kern und 16b mit verbreitertem Kern und einem kernlosen Abdichtungsabschnitt 18.

Die in Figur 6c dargestellte ringförmige Runddichtung hat eine relativ geringe Bauhöhe gemessen senkrecht zur Ringebene der Dichtung. Die Bauhöhe wird durch die betreffende Höhe der verbreiterten Endabschnitte der Dichtung bestimmt und kann beispielsweise bei kleiner als 3 mm liegen. Die Schräglage der Dichtlippe relativ zum Grundkörper der Dichtung ist bei dem Ausführungsbeispiel so eingestellt, dass die Dichtlippe nicht über diese maximale Bauhöhe hinausragt.

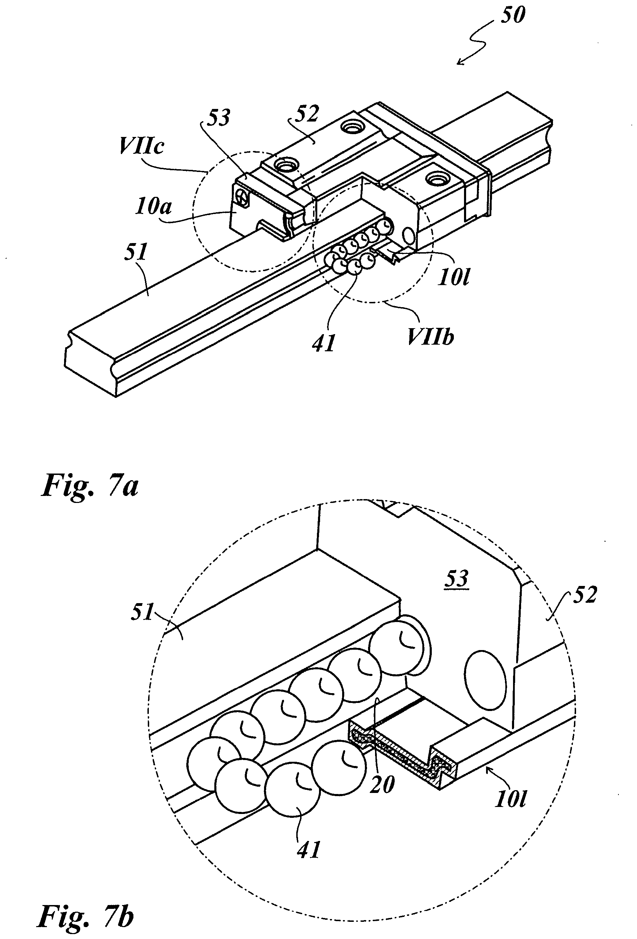

**Figur 7a** zeigt eine als Linearlager 50 ausgebildete Lagereinheit. Bei dem Linearlager 50 handelt es sich um eine sogenannte Kugelumlaufführung mit einem als Führungsschiene 51 ausgebildeten ersten Lagerteil und einem als Laufwagen 52 ausgebildeten zweiten Lagerteil, wobei diese beiden Lagerteile 51, 52 unter Zwischenschaltung von als Kugeln ausgebildeten Wälzkörpern 41 an diesen geführt relativ zueinander bewegbar sind. Die Führungsschiene 51 weist an beiden Seitenflächen im Querschnitt kreisförmige lineare Führungsnuten auf. Entsprechend hierzu sind an den Innenseiten des Laufwagens 52 Führungsnuten ausgebildet. Sie bilden jeweils einen Abschnitt eines Führungskanals für die zwischen dem Laufwagen 52 und der Führungsschiene 51 angeordneten Kugeln 41 des Kugelumlaufs. Bei dem dargestellten Ausführungsbeispiel ist zwischen der Führungsschiene 51 und dem Laufwagen 52 auf der rechten Seite und auf der linken Seite jeweils ein Kugelumlauf ausgebildet. In den Figuren 7a und 7b ist der Laufwagen 52 im Bereich des rechten Kugelumlaufs aufgeschnitten, so dass die Kugeln 41 zu erkennen sind. Der rechte und der linke Kugelumlauf sind durch auf dem Führungswagen 52 stirnseitig angeordnete Umlenkendkappen 53 verschlossen, wobei auf der vorderen Stirnseite und auf der hinteren Stirnseite des Laufwagens 52 jeweils eine solche Umlenkendkappe 53 über Schraubverbindungen fixiert angeordnet ist. Diese vorderen und hinteren Umlenkkappen 53 schließen jeweils an der betreffenden Stirnseite den rechten und den linken Kugelumlauf als gemeinsame Umlenkendkappe ab.

Diese Linearführung in Figur 7a weist Abstreifdichtungen 10a und Längsdichtungen 10l auf. Diese werden im folgenden näher beschrieben.

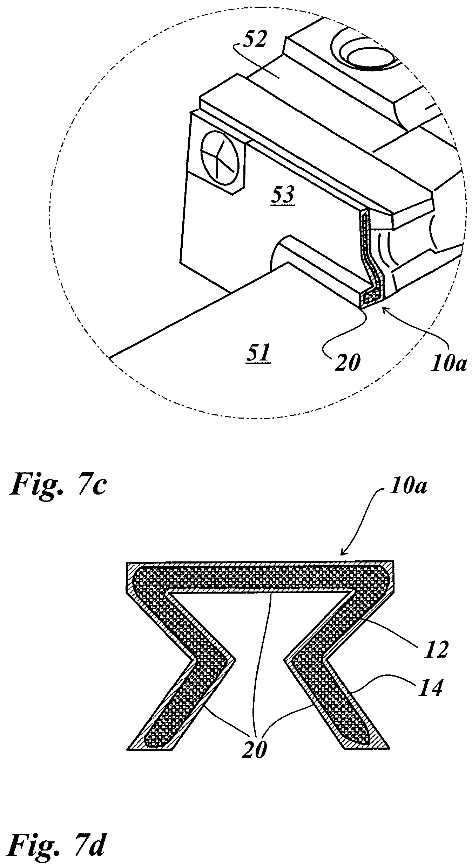

Eine Abstreifdichtung 10a ist jeweils an der vorderen und an der hinteren Stirnseite des Laufwagens 52 angeordnet. Die Abstreifdichtung 10a ist in **Figur 7c** vergrößert dargestellt. Sie ist in dem dargestellten Fall lappenförmig, d.h. im wesentlichen flach plattenförmig ausgebildet. Sie ist mit ihrer flächigen Seite auf der betreffenden Stirnfläche des Laufwagens 52 flächig aufliegend fixiert. Die Kontur ihres unteren Randes ist komplementär zum Querschnitt der Führungsschiene 51 ausgebildet. Dieser untere Rand der Abstreifdichtung 10a umgreift die Führungsschiene an ihrer Oberseite und an ihren seitlichen Längsseiten komplementär aufliegend. Bei der Relativbewegung von Laufwagen 52 und Führungsschiene 51 gleitet die aufliegende komplementäre Randkontur als Dichtbereich ausgebildet über die Oberseite und die seitlichen Längsseiten der Führungsschiene 51. Die Gleitbewegungsrichtung verläuft in Art einer Abstreifbewegung senkrecht zur Längskante des den Dichtbereich bildenden Randes der Abstreifdichtung 10a. Bei der Abstreifbewegung streift die Abstreifdichtung 10a eventuell auf der Oberseite und den seitlichen Längsseiten der Führungsschiene angelagerte Schmutzpartikel und flüssige oder pastöse Verschmutzungen ab und hält Schmierstoffe, wie Fette oder Öle, im Bereich des Laufwagens.

Die Längsdichtungen 10l sind bei dem Ausführungsbeispiel ebenfalls als flacher, lappenförmiger Körper, d.h. im wesentlichen flach plattenförmig, ausgebildet. **Figur 7b** zeigt die rechtsseitige Längsdichtung 10l in vergrößerter Darstellung. Beide Längsseiten des im wesentlichen plattenförmigen Körpers der Dichtung sind abgewinkelt. Die Längsdichtung liegt flächig an der Unterseite des Laufwagens 52 auf und untergreift somit den Laufwagen 52. Sie gleitet mit einem als weichen Dichtbereich ausgebildeten freien Längsrand über eine an dem unteren Randabschnitt der seitlichen Längsfläche der Führungsschiene 51 unterhalb des Kugelumlaufs ausgebildeten Kontaktfläche. Dieser Längsrand der Längsdichtung 10l ist als Dichtlippe 20 ausgebildet. Die Gleitbewegung der Längsdichtung 10l verläuft entlang der Längskante dieser Dichtlippe 20. Der andere Längsrand der Längsdichtung 10l schließt mit der Seitenfläche des Laufwagens fluchtend ab.

Die Abstreifdichtung 10a und die Längsdichtung 10l sind jeweils in Sandwichtechnik hergestellt. Sie bestehen jeweils aus einem harten Kern und einer weichen Haut. Die Fixierung der Dichtung an der Stirnseite bzw. Unterseite des Laufwagens 52 erfolgt durch Zusammenwirken mit dem harten Kern der Dichtung, z. B. indem ein Befestigungsmittel, welches als Schraube ausgebildet sein kann, die Dichtung im Bereich des harten Kerns durchgreift oder die Dichtung mit dem harten Kern in eine Halterung eingesteckt ist. Den Dichtbereich bildet der freie Rand der Dichtung, indem die weiche Haut dieses Randes als Dichtlippe ausgebildet ist.

**Figur 7d** zeigt eine abgewandelte Ausführungsform der Abstreifdichtung 10a. Sie ist als bügelförmiges Dichtelement ausgebildet, das der Kontur des Querschnitts der Führungsschiene 51 komplementär angepasst ist. Das bügelförmige Dichtelement 10a ist im wesentlichen U-förmig ausgebildet. Es weist zwei seitliche Schenkel auf, die über einen Verbindungsschenkel miteinander verbunden sind. Die seitlichen Schenkel sind jeweils entsprechend der Kontur der seitlichen Längsflächen der Führungsschiene 51 abgewinkelt. Der Dichtungsbereich des bügelförmigen Dichtelements 10a ist entlang des Innenrandes der beiden seitlichen Schenkel und des Verbindungsschenkels als Dichtlippe ausgebildet.

Aus der Querschnittsdarstellung in Figur 7d ist erkennbar, dass auch in der bügelförmigen Abstreifdichtung 10a ein Kern 12 ausgebildet ist. Dieser ist von der Haut 14 umschlossen. Die Haut 14 bildet an der Innenseite der Schenkel eine im äußeren Dichtbereich kernlose Dichtlippe. Besonders vorteilhaft ist bei dem dargestellten Ausführungsbeispiel, dass der Kern 12 sich über die gesamte Länge des bügelförmigen Dichtelements bis hin zu den freien Stirnenden der seitlichen Schenkel erstreckt, und zwar mit nur geringem Abstand vor dem Endbereich der Haut endet. Bei abgewandelten Ausführungen kann das Kernende auch die Haut bis nach außen durchgreifen. Damit ist sichergestellt, dass die Schenkel bis zum Schenkelende jeweils hinsichtlich ihrer Form und Ausrichtung durch den Kern stabilisiert sind. Der Kern bildet außerdem einen Verstärkungs- und Stabilisierungsabschnitt für die am gesamten Innenrand der Schenkel angeordnete Dichtlippe, die in ihrem dichtenden Randbereich kernlos ausgebildet ist, d.h. nur aus der weichen Haut besteht. Die in Figur 7d dargestellte Abstreifdichtung 10a kann in einem Gehäuse an der Stirnseite des Laufwagens angeordnet und befestigt sein, indem die Dichtung 10a in einer entsprechend bügelförmigen Dichtungsaufnahme des Gehäuses eingesteckt angeordnet ist.

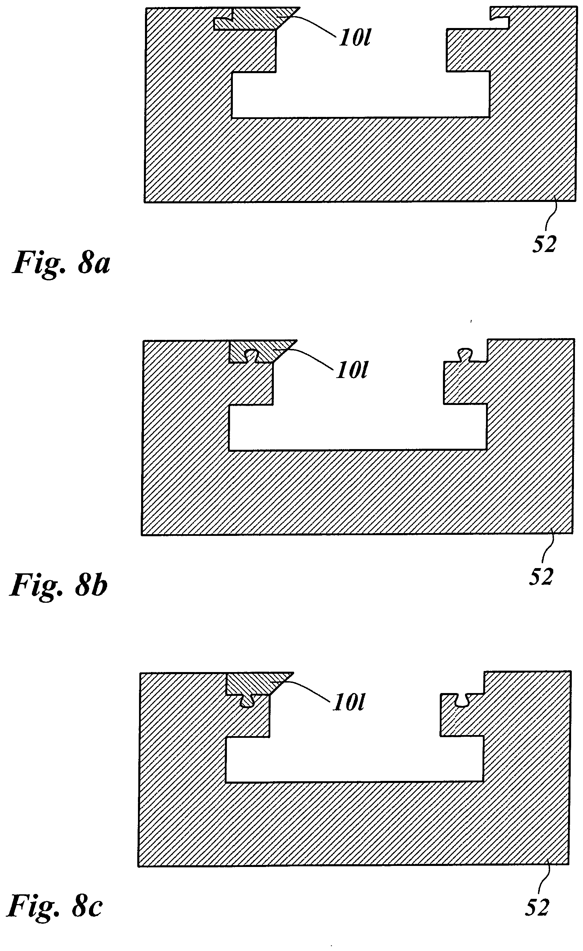

In den **Figuren 8a bis 8f** sind diverse Ausführungsmöglichkeiten der Befestigung von Längsdichtungen 10l an einem entsprechenden Trägerbauteil, wie der Führungswagen 52, dargestellt. Der betreffende Führungswagen 52 weist jeweils zwei gegenüberliegende Aufnahmen für jeweils eine Längsdichtung 10l auf. In den Figuren ist in der linken Aufnahme jeweils eine Längsdichtung 10l eingesetzt. In der rechten Aufnahme ist zur besseren Anschauung jeweils keine Dichtung 10l eingesetzt.

In den Ausführungen der Figuren 8a bis 8e ist die in die Aufnahme eingesetzte Längsdichtung 10l jeweils über eine hinterschnittene Verrastung fixiert, und zwar wie folgt:
In **Figur 8a** ist in dem Laufwagen 52 eine hinterschnittene Längsnut in der vertikalen Begrenzungsfläche der Aufnahme ausgebildet. Die komplementär in die Aufnahme eingesetzte Längsdichtung weist in diesem Bereich einen komplementär ausgebildeten hintergreifenden leistenförmigen Vorsprung auf.

In **Figur 8b** ist in der horizontalen Grundfläche der Aufnahme eine hinterschnittene Leiste ausgeformt, wobei die komplementär ausgebildete Längsdichtung in ihrer Grundfläche eine entsprechende hinterschnittene Längsnut aufweist, in die die Leiste eingreift.

In **Figur 8c** ist die Ausgestaltung entsprechend, jedoch gerade umgekehrt wie in Figur 8b, indem der leistenförmige Vorsprung an der horizontalen Grundfläche der Längsdichtung und die hinterschnittene komplementäre Aufnahmenut in der horizontalen Grundfläche der Aufnahme ausgebildet ist.

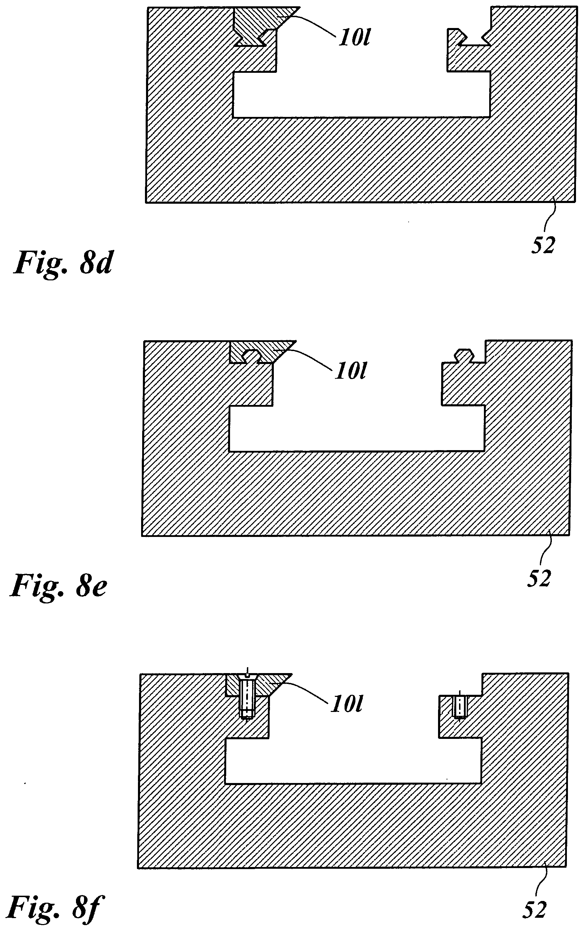

Bei der Ausführungsform in **Figur 8d** ist die Ausgestaltung entsprechend wie in Figur 8c, wobei in diesem Falle jedoch der leistenförmige Vorsprung und komplementäre Nut schwalbenschwanzförmig ausgebildet sind.

In **Figur 8e** ist die Ausgestaltung ähnlich wie bei der Ausführungsform in Figur 8b. In Figur 8e ist im Unterschied lediglich der Querschnitt des leistenförmigen Vorsprungs und der Nut nicht bogenförmig abgerundet, sondern abgekantet in Art eines Sechsecks.

In **Figur 8f** ist die in der Aufnahme angeordnete Längsdichtung 10l über eine Befestigungsschraube in der Aufnahme fixiert, indem die Befestigungsschraube die Längsdichtung durch ein Aufnahmeloch hindurch durchgreift und mit ihrem Gewindeende in ein Gewindeloch eingreift, welches in der horizontalen Grundfläche der Dichtungsaufnahme ausgebildet ist.

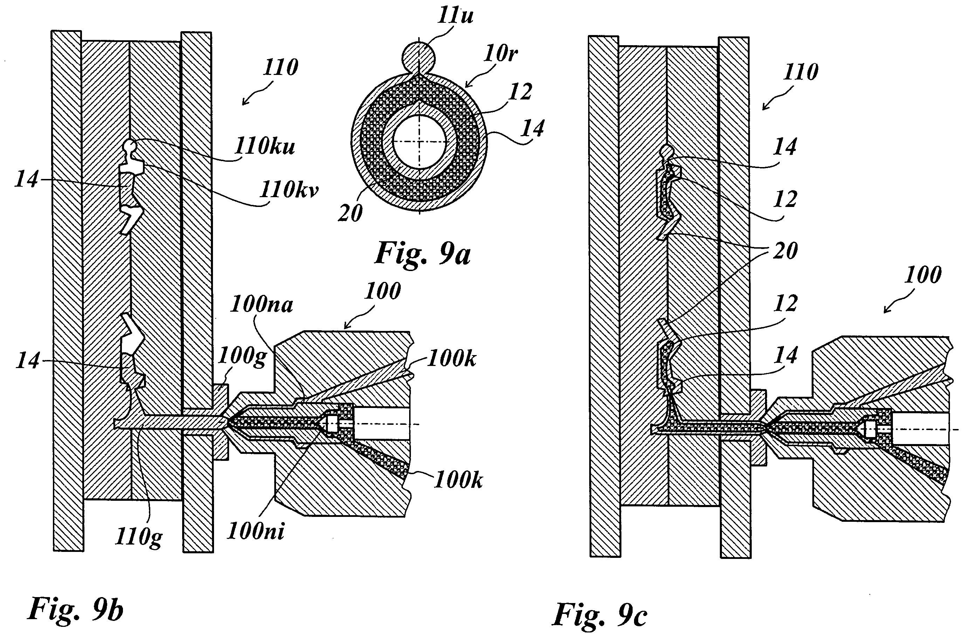

Die **Figuren 9****,** **10** **und** **11** zeigen die über Sandwich-Technik erfolgende Spritzgieß-Fertigung von ringförmigen Runddichtungen. Dabei zeigen die Figuren 9b, 9c, 10b, 10c und 11b, 11c die Fertigungseinrichtung und die Figuren 9a, 10a und 11a die in der jeweiligen Fertigungseinrichtung hergestellte Runddichtung.

Bei den Runddichtungen handelt es sich um ringförmige Runddichtungen, vorzugsweise zum Einsatz in Drehlagern mit Wälzkörpern, wie sie in den Figuren 6a und 6b im eingebauten Zustand gezeigt sind, wobei in Figur 6c ein Querschnitt einer besonders bevorzugten Ausführungsform dargestellt ist. Die Figuren 9a, 10a und 11a zeigen die in den jeweiligen Fertigungseinrichtungen hergestellten Runddichtungen jeweils in einer Schnittdarstellung mit Schnittebene parallel zur Ringebene. Der Querschnitt senkrecht zur Ringebene ist nicht dargestellt. Er ist vorzugsweise wie der in Figur 6c dargestellte Querschnitt ausgebildet.

Im folgenden wird nun näher auf die Ausgestaltung und Fertigung der Runddichtung in **Figur 9a** eingegangen. Wie aus der Figur 9a erkennbar ist, ist bei dieser Ausführung der ringförmige Kern 12 der Dichtung als geschlossener Ring ausgebildet. Dieser ringförmige Kern ist torusförmig und allseitig von Haut umgeben. Dabei ist die Haut an dem radial inneren Umfang als Dichtlippe 20 ausgebildet, die bei bevorzugter Ausführungsform im Querschnitt von dem ringförmigen Körper der Dichtung schräg radial nach innen auskragt, so wie dies z. B. bei dem in **Figur 6c** dargestellten Ausführungsbeispiel der Fall ist.

In Figur 9a ist weiter zu erkennen, dass an einer radial äußeren Stelle des ringförmigen Körpers der Dichtung eine aus Haut bestehende Überlaufausformung, im folgenden Überlaufbohne 11u genannt, ausgebildet ist. Diese Überlaufbohne 11u wird nach dem Spritzgießen abgetrennt, und zwar in gleicher Weise wie der z. B. stangenförmige Anguss an der Anspritzstelle 11g, der in Figur 9a nicht dargestellt ist. Er ist bereits abgetrennt. Nach dem Abtrennen des Angusses der Anspritzstelle 11g und der Überlaufbohne 11u wird die fertige Runddichtung erhalten, die für den Einsatz in dem Drehlager optimaler Weise als völlig rotationssymmetrischer Ringkörper ausgebildet ist.

Die in den **Figuren 9b und 9c** dargestellte Spritzgieß-Fertigungseinrichtung umfasst eine Spritzgießform 110 mit ringförmiger Kavität 110kv. Die Spritzgießform 110 ist über einen Angusskanal 110g mit einer sogenannten Sandwichplatte 100 verbunden. Die Sandwichplatte 100 umfasst eine Nadelverschlusseinrichtung 100n mit einer äußeren Nadel 100na, die mit dem Einlasskanal 100k der Hautkomponente verbunden ist, und eine innere Nadel 100ni, die mit dem Einlasskanal 100k der Kernkomponente verbunden ist. Die Einlasskanäle 100k, 100k sind mit nicht dargestellten Spritzeinrichtungen mit Extruder verbunden, die die Hautkomponente bzw. die Kernkomponente als Schmelze in den Einlasskanal 100k einleiten. Die Einlasskanäle 100k, 100k und die gesamte Sandwichplatte 100 sind gleich oder unterschiedlich temperiert.

Die Nadelverschlusseinrichtung 100n steuert den Einlass der Hautkomponente und der Kernkomponente in die Spritzgießform 110. Die Steuerung der Nadelverschlusseinrichtung 100n erfolgt durch Steuerung der Schaltbewegung der Nadeln 100na, 100ni durch Maschinensteuerung und/oder durch den Einspritzdruck der Komponenten. Die Nadelverschlusseinrichtung 100n ist mit einer an der Sandwichplatte 100 ausgangsseitig angeordneten Angießbuchse 100g verbunden, die an den Angusskanal 110g der Spritzgießform 110 angeschlossen ist. Die Anspritzung in die Kavität 110kv der Spritzgießform erfolgt im Ausmündungsbereich des Angusskanals 110g.

Charakteristisches Merkmal der Sandwichtechnik des Spritzgießens ist, dass das Einspritzen der Hautkomponente und der Kernkomponente in separaten Schritten nacheinander erfolgt, wobei die Schritte auch zeitlich überlappen können. In einem ersten Schritt wird zunächst die weichere Komponente, d.h. die Hautkomponente eingespritzt. In einem zweiten Schritt erfolgt sodann die Einspritzung der härteren Kernkomponente. Es ist möglich, dass am Ende nach dem Einspritzen der Kernkomponente nochmal umgeschaltet wird auf die weichere Hautkomponente, um im Bereich der Anspritzstelle einen Hautabschluss zu erhalten.

Figur 9b zeigt die Einrichtung beim Zulauf der Hautkomponente. Der Zulauf erfolgt über die Offenstellung der Außennadel 100na. Die Hautkomponente füllt in diesem ersten Schritt die Kavität 110kv der Spritzgießform 110 von der Anspritzstelle her fortschreitend. Die Anspritzstelle ist, wie den Figuren 9b und 9c entnehmbar, an der radial äußeren Seite der Kavität 110kv ausgebildet. Während die Hautkomponente in die Kavität 110kv eingeleitet wird und sich in dieser fortschreitend erstreckt, haftet sie bei ihrem Fortschreiten an den Formwandungen an und kann dabei bereits je nach Temperatur der Formwandungen dort mehr oder weniger erstarren. Noch bevor die Kavität vollständig von der Haut gefüllt ist, wird die Einspritzung auf die härtere Kernkomponente umgestellt.

Die Kernkomponente wird nun über dieselbe Anspritzstelle in die Kavität 110kv eingeleitet. Sie wird dabei gewissermaßen in die Hautkomponente koaxial zu der teilweise bereits an den Formwandungen anliegenden und bereits mehr oder weniger dort erstarrten Haut eingeleitet. Die Kernkomponente fließt dabei von der Haut entlang ihrer Fließrichtung umgeben. Unter Ausnutzung des Quellflusseffekts wird die Kavität gefüllt, wobei die Kernkomponente die Hautkomponente in einem schon erstarrten Kanal aus Hautkomponente vor sich hertreibt. Schließlich erfolgt in dem dem Anspritzpunkt gegenüberliegenden Endbereich der Kavität der Zusammenfluss der Hautkomponente. Mit dem Zusammenfluss der Hautkomponente erfolgt ein Austritt von Hautkomponente in einen Überlaufraum 110ku, der als Fortsatz der Kavität an diesem Ende ausgebildet ist. Weitgehend gleichzeitig erfolgt der Zusammenfluss der Kernkomponente und schließlich je nach Prozessbedingungen auch ein Austritt der Kernkomponente in den Überlaufraum 110ku. In dem Überlaufraum 110ku bildet sich damit die sogenannte Überlaufbohne 11u, die im dargestellten Fall primär aus Haut besteht. Je nach Prozessbedingungen bzw. Zielrichtung kann die Überlaufbohne auch einen Fortsatz des Kerns aufweisen. Wesentlich ist, dass aufgrund des gezielten Zusammenflusses und Austritts eines Teils des zusammenfließenden Bereichs der Haut ein Zusammenfluss der Kernkomponente erreicht wird, womit die Kernkomponente als geschlossener Ring entsteht.

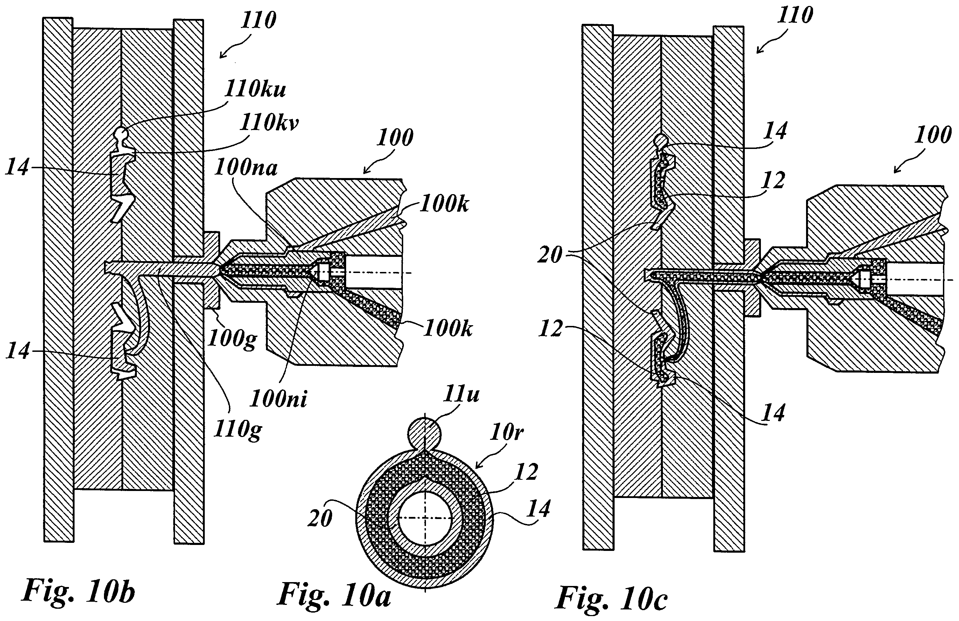

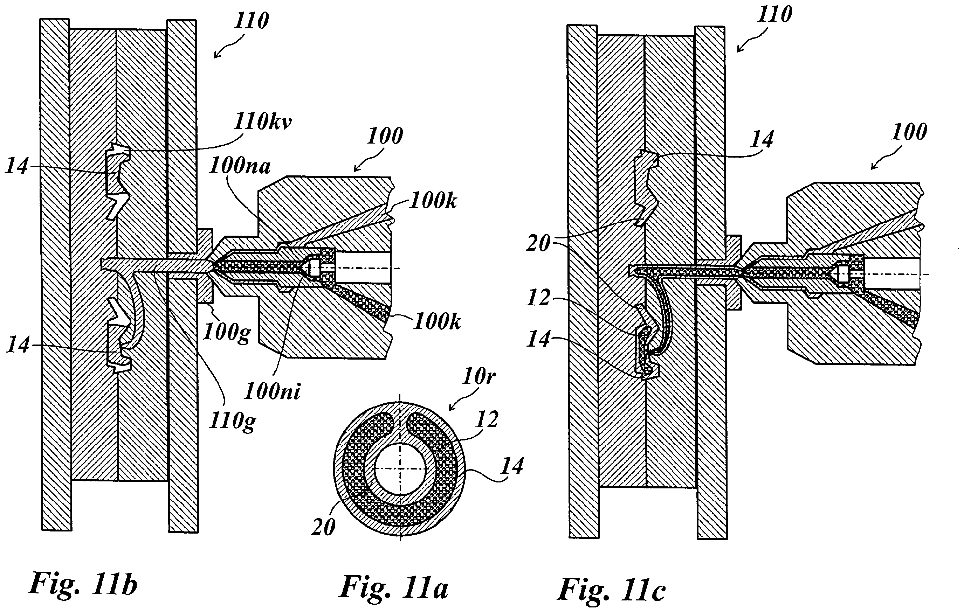

In der Fertigungseinrichtung der **Figuren 10b und 10c** erfolgt die Fertigung der in **Figur 10a** dargestellten ringförmigen Runddichtung. Diese Runddichtung ist wie der Vergleich der Figur 10a mit der Figur 9a zeigt, identisch ausgebildet wie die in der Fertigungseinrichtung der Figuren 9b und 9c hergestellte Dichtung. Die Dichtung in Figur 10a weist ebenfalls einen als geschlossenen Ring ausgebildeten Kern 12 auf. Wesentlich verantwortlich hierfür ist der Umstand, dass auch die Spritzgießform 110 der Figuren 10b und 10c eine Kavität 110kv mit einem Überlaufraum 110ku aufweist. In gleicherweise wie vorangehend beschrieben erfolgt im Bereich des Überlaufraums 110ku der Zusammenfluss und der Übertritt der Hautkomponente und in entsprechender Weise wie vorangehend beschrieben auch der Zusammenfluss der Kernkomponente unter Ausbildung des geschlossenen ringförmigen Kerns 12. Der einzige Unterschied zu der Fertigungseinrichtung der Figuren 9b und 9c ist, dass in der Einrichtung der Figuren 10b und 10c die Anspritzstelle nicht an dem radial äußeren Rand der Kavität, sondern in einem mittleren Bereich des Querschnitts zwischen dem radial äußeren Stirnende und dem radial inneren Stirnende erfolgt. Der Vorteil dieser mittigen Anspritzung liegt darin, dass die Anspritzung zwischen den beiden im Querschnitt vergrößerten Hohlräumen der Kavität, und zwar unmittelbar in dem verengten Verbindungsabschnitt zwischen diesen erfolgt, so dass die Komponenten von der Anspritzstelle unmittelbar in beide verbreiterten Hohlräume eingeleitet werden und somit eine gleichmäßige Befüllung der beiden Hohlräume ausgehend vom Anspritzpunkt erfolgt. Im Unterschied hierzu läuft bei der endseitigen Anspritzung in der Einrichtung in den Figuren 9b und 9c die Befüllung vom äußeren Hohlraum her fortschreitend in den verengten Verbindungsabschnitt und sodann zum äußeren Hohlraum hin. Bei der endständigen Anspritzung ist die Prozesssteuerung schwieriger, da verhindert werden muss, dass eine vorzeitige Erstarrung in dem verengten Verbindungsabschnitt erfolgt und somit nicht die gewünschte Befüllung mit Haut- und Kernkomponente gleichmäßig auch in dem inneren Hohlraum erfolgt. Die Fertigungseinrichtung der **Figuren 11b und 11c** ist gleich ausgebildet wie die in den Figuren 10a und 10b, jedoch kann mit dieser Einrichtung kein erfindungsgemäßes Verfahren durchgeführt werden. Der einzige Unterschied besteht darin, dass die Kavität 110kv keinen Überlaufraum 110ku aufweist. Beim Spritzvorgang erfolgt in diesem Falle der Zusammenfluss der Hautkomponente, ohne dass ein Überlauf von Hautkomponente in einen Überlaufraum möglich ist, denn ein solcher ist in dieser Spritzgießform nicht vorhanden. Mit dem Zusammenfluss der Hautkomponente erfolgt in diesem Falle bei vergleichbaren Prozessbedingungen wie in Figur 10a und 10b eine Verdichtung der Hautkomponente im Zusammenflussbereich. Die Kernkomponente wird dadurch daran gehindert, einen geschlossenen ringförmigen Kern auszubilden. Es wird der in Figur 11a zu erkennende offene Ring des Kerns 12 gebildet. Ringförmige Runddichtungen mit einem nichtgeschlossenen Ring, wie in Figur 11a dargestellt, sind beim Einsatz in Wälzlagern in der Regel nicht erwünscht, da die Laufeigenschaften und die Festigkeit aufgrund des nicht ringförmig geschlossenen Kerns beeinträchtigt ist. Es sind allerdings auch Ausführungen denkbar, bei denen gezielt bei einer ringförmigen Dichtung ein nichtringförmig geschlossener Kern angestrebt wird.

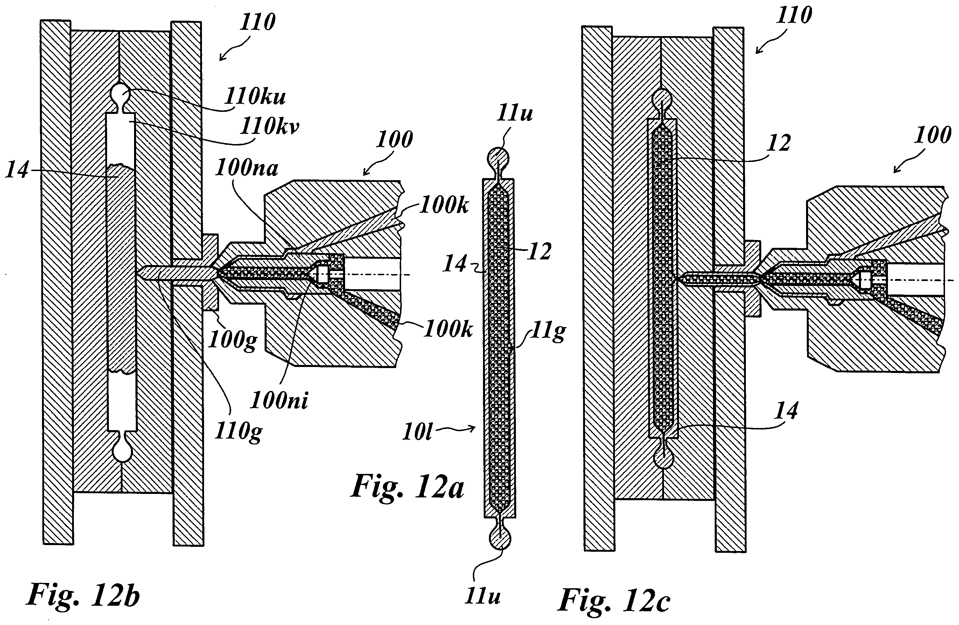

Die **Figuren 12 bis 15** zeigen die Fertigung von Längsdichtungen. Bei den Längsdichtungen handelt es sich um im wesentlichen plattenförmige Dichtungen, wie sie z. B. in Linearlagern eingesetzt werden können. Eine solche Längsdichtung 10l ist in Figur 7b im eingebauten Zustand dargestellt.

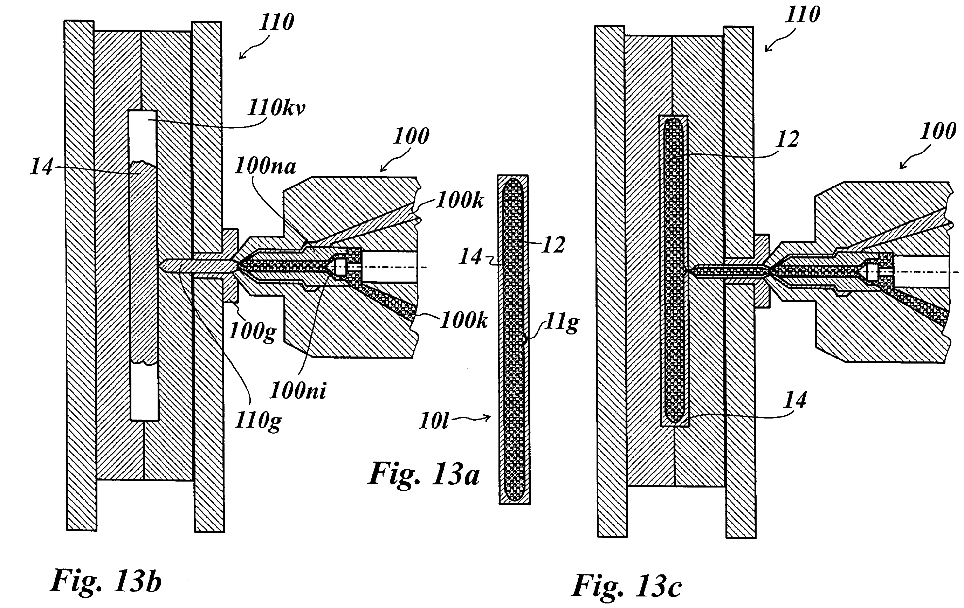

Die in den jeweiligen Fertigungseinrichtungen der Figuren 12b, 12c und 13b, 13c und 14b, 14c und 15b, 15c über Sandwichtechnik gespritzten Längsdichtungen 10l sind in den **Figuren 12a****,** **13a****,** **14a** **bzw. 15a** im Querschnitt dargestellt. Sie bestehen aus einem Kern 12 und einer außen umgebenden Haut 14. Der Kern 12 ist ähnlich plattenförmig wie der gesamte Körper der Dichtung ausgebildet. Aus der Querschnittsdarstellung in den Figuren 12a, 13a, 14a und 15a ist erkennbar, dass an beiden Stirnlängsseiten die Haut als Dichtungsbereich ausgebildet ist, und zwar ist diese Stirnlängsseite im Querschnitt rechteckig, so dass die obere Längskante und die untere Längskante der Stirnlängsseite jeweils eine im Querschnitt rechtwinklige Dichtlippe 20 bilden. Dabei ist die Stirnlängsseite des Kerns in den unterschiedlichen Ausführungen der Figuren 12a, 13a, 14a und 15a unterschiedlich ausgebildet. In Figur 12a ist z. B. vorgesehen, dass an beiden Stirnlängsseiten das Kernende im Querschnitt spitz zulaufend ist und die Haut an ihrem Stirnende durchgreift oder fast durchgreift, d.h. bis mit geringem Abstand zum Hautende hinreicht. Damit werden die an den beiderseitigen Kanten ausgebildeten Dichtlippen 20 durch den Kern hinsichtlich Ausrichtung, Form und Festigkeit stabilisiert. Eine andere Ausgestaltung der Stirnlängsseite ist z. B. in Figur 13a vorgesehen. Bei dieser Ausführung ist das Stirnende des Kerns in dem dargestellten Querschnitt abgerundet, wobei das abgerundete Ende mit Abstand vor dem Stirnende der Haut endet. Dies erlaubt es, die anschließende stirnseitige Haut als relativ voluminöse kernlose ein- oder mehrfache Dichtlippe auszugestalten, was bei speziellen Anwendungsfällen als Längsdichtung auch vorteilhaft sein kann.

Die Ausgestaltung der Stirnlängsseite der Dichtung kann durch entsprechende Fertigungsmaßnahmen gezielt erreicht werden, wie dies in Verbindung mit den Figuren 12b, 12c und 13b, 13c und 14b, 14c und 15b, 15c im folgenden aufgezeigt wird.

Einen bis ins Stirnende der Dichtung sich erstreckenden Kern, der unmittelbar vor dem Stirnende der Haut erst endet oder sogar die Haut durchgreift, lässt sich durch Einsatz einer Spritzgießform erreichen, bei der die Kavität an dem betreffenden Stirnende einen entsprechenden Überlaufraum aufweist. Dies ist in der Fertigungseinrichtung in den **Figuren 12b, 12c** gezeigt. Die Fertigungseinrichtung ist gleich aufgebaut, wie die in den vorangehenden Figuren 9b, 9c; 10b, 10c und 11b, 11c. Sie weist eine Sandwichplatte 100 und eine entsprechend verbundene Spritzgießform 110 auf. Die Sandwichplatte 100 ist identisch ausgebildet wie in den genannten Figuren. Die Spritzgießform 110 unterscheidet sich von den dortigen Spritzgießformen lediglich darin, dass die Kavität 110kv entsprechend der Form der Längsdichtung 10l ausgebildet ist. Der Spritzgießvorgang erfolgt in entsprechender Weise wie in Verbindung mit den vorangehenden Figuren beschrieben.

Wie in den Figuren 12b und 12c erkennbar, erfolgt die Anspritzung mittig zwischen den Stirnlängsseiten der Kavität 110kv. An den beiden Stirnseiten der Kavität ist ein Überlaufraum 110ku ausgebildet.

Figur 12b zeigt, wie in dem ersten Schritt die Hautkomponente in die Kavität 110kv eingespritzt wird und sich die Kavität beiderseits der mittigen Anspritzstelle fortschreitend füllt. Die Haut schreitet dabei an den Formwänden in Richtung der Stirnenden voran. Bevor die Kavität vollständig ausgefüllt, und zwar vorzugsweise bevor die Stirnenden erreicht sind, ist, wird die Einspritzung jedoch auf die Kernkomponente umgestellt, und zwar über dieselbe mittige Anspritzstelle. Daraufhin breitet sich die Kernkomponente ebenfalls beiderseits der mittigen Anspritzstelle in Richtung der Stirnenden aus, und zwar innerhalb der Haut, d.h. axial umschlossen von der teilweise an den Formwänden anhaftenden und in den Außenbereichen bereits mehr oder weniger erstarrten Haut. Schließlich kommt die Haut an den Stirnenden zum Zusammenfluss und ein Teil der zusammengeflossenen Haut tritt in die Überlaufform 110ku aus. Dies erlaubt es, dass sich der Kern bis ins Stirnende ausbreitet und sich im Querschnitt spitz zulaufend bis in den Endbereich der Haut erstreckt und je nach Prozessbedingungen möglicherweise am Stirnende die Haut sogar durchgreift und damit auch ein Teil des Kerns in den Überlaufraum 110ku eintritt. Diesen Zustand am Ende des Einspritzvorgangs zeigt Figur 12c.

Anstelle nur eines Überlaufraums 110ku an jeder der beiden Stirnenden der Kavität 110kv ist es auch möglich, dass jeweils mehrere Überlaufräume 110ku nebeneinander entlang der Stirnendseite der Kavität angeordnet sind, um eine möglichst gleichmäßige Form des Stirnendes des Kerns über die gesamte Längserstreckung der Stirnseite zu erreichen. Alternativ hierzu kann der Überlaufraum 110ku auch als entsprechend lang erstreckter Raum an dem jeweiligen Stirnende der Kavität ausgebildet sein und der Überlaufspalt sich über die gesamte Länge erstrecken oder mit einigen Anbindungsstellen mit der Kavität verbunden sein.

Die **Figuren 13b, 13c** zeigen eine entsprechend aufgebaute Fertigungseinrichtung wie die in den Figuren 12b, 1 12c, jedoch kann mit dieser Einrichtung kein erfindungsgemäßes Verfahren durchgeführt werden. Zur Herstellung der Dichtung der Figur 13a ist bei der Fertigungseinrichtung der Figuren 13b und 13c vorgesehen, dass die Kavität 110kv der Spritzgießform 110 allerdings ohne stirnendseitigen Überlaufraum 110ku ausgebildet ist. Die Einspritzung ist gleich wie im Falle der Figuren 12b und 12c mittig ausgebildet, d.h. zwischen den Stirnenden der Kavität. Figur 13b zeigt die Fertigungseinrichtung beim Einspritzen der Hautkomponente. Die Situation ist gleich wie in Figur 12b. Figur 13c zeigt die Einrichtung zum Ende des Einspritzens der Kernkomponente. In Figur 13c ist erkennbar, dass im Unterschied zu der Ausführung in Figur 12c der Kern am Stirnende abgerundet ist und mit Abstand vor dem Stirnende der Haut endet. Der Kern reicht also nicht bis zum Stirnende der Haut und tritt auch nicht durch die Haut hindurch. Dieser Unterschied zu der Situation in Figur 12c besteht aufgrund der Tatsache, dass die Kavität 110kv bei der Einrichtung der Figuren 13b und 13c keinen Überlaufraum 110ku aufweist und somit kein Austritt von Hautkomponente oder Kernkomponente in einen Überlaufraum möglich ist. Anstelle dessen erfolgt beim stirnendigen Zusammenfluss der Hautkomponente eine Verdichtung der Haut im Zusammenflussbereich, so dass der Kern sich nicht bis zum Stirnende der Haut hin erstrecken kann, sondern vorher mit Abstand endet.

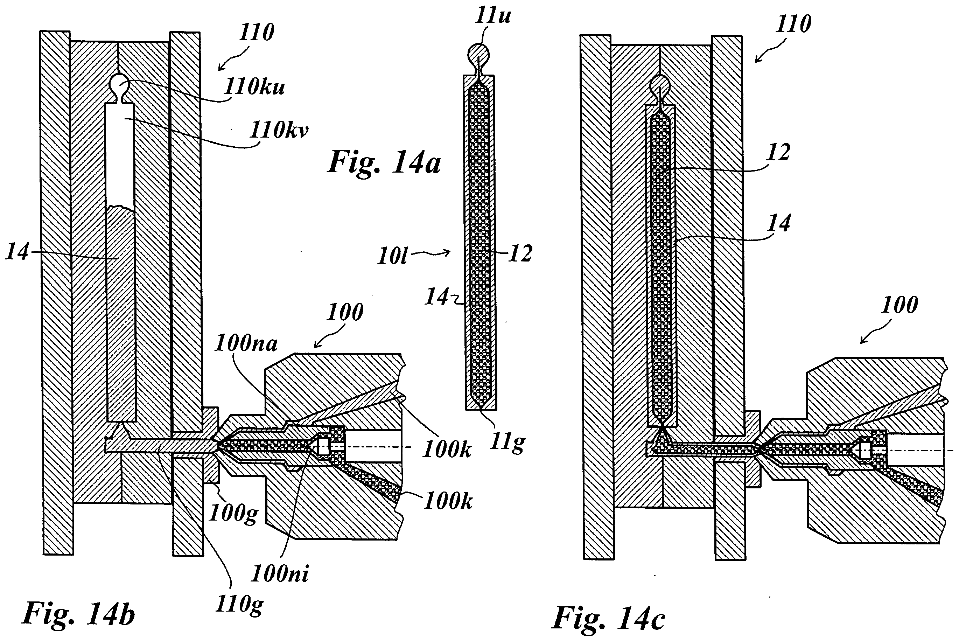

Die **Figuren 14b und 14c** zeigen die Fertigungseinrichtung mit Anspritzung im Bereich eines Stirnendes der Kavität 110kv und mit Überlaufraum 110ku an dem gegenüberliegenden Stirnende. Anhand der in **Figur 14a** dargestellten Längsdichtung 10l, wie sie in dieser Fertigungseinrichtung hergestellt ist, ist erkennbar, dass das der Anspritzung gegenüberliegende Stirnende der Dichtung gleich ausgebildet ist wie die Stirnenden der Dichtung in Figur 12a. Dies ist so aufgrund des Umstands, weil die Kavität 110kv in den Figuren 14b und 14c an dieser Endstelle den Überlaufraum 110ku aufweist und damit beim Zusammenfluss der Haut ein Überlauf der Hautkomponente und gegebenenfalls der Kernkomponente erfolgt, und zwar in gleicher Weise wie in Verbindung mit Figur 12c beschrieben. An dem gegenüberliegenden Stirnende der Dichtung ist in Figur 14a die Anspritzstelle zu erkennen, bei der es sich je nach Ausgestaltung der Ausmündung des Angusskanals 110g um einen Anspritzpunkt oder um eine Anspritzlinie handelt. Jedenfalls reicht im Falle der Figur 14a das Kernende im Bereich der Anspritzstelle bis durch die Haut hindurch, und zwar nach außen hin spitz zulaufend, d.h. im Querschnitt ähnlich wie das Ende des Kerns am gegenüberliegenden Stirnende der Dichtung.

Für den Fall, dass erwünscht ist, dass im Bereich der Anspritzstelle sich der Kern nicht bis nach außen erstreckt, kann bei dem Spritzvorgang am Ende nach dem Einspritzen der Kernkomponente nochmal auf die Hautkomponente umgeschaltet werden, d.h. über eine kurze Zeit am Ende des Spritzvorgangs nochmal Hautkomponente eingespritzt werden, um im Bereich der Anspritzstelle einen Abschluss durch die Haut zu erhalten.

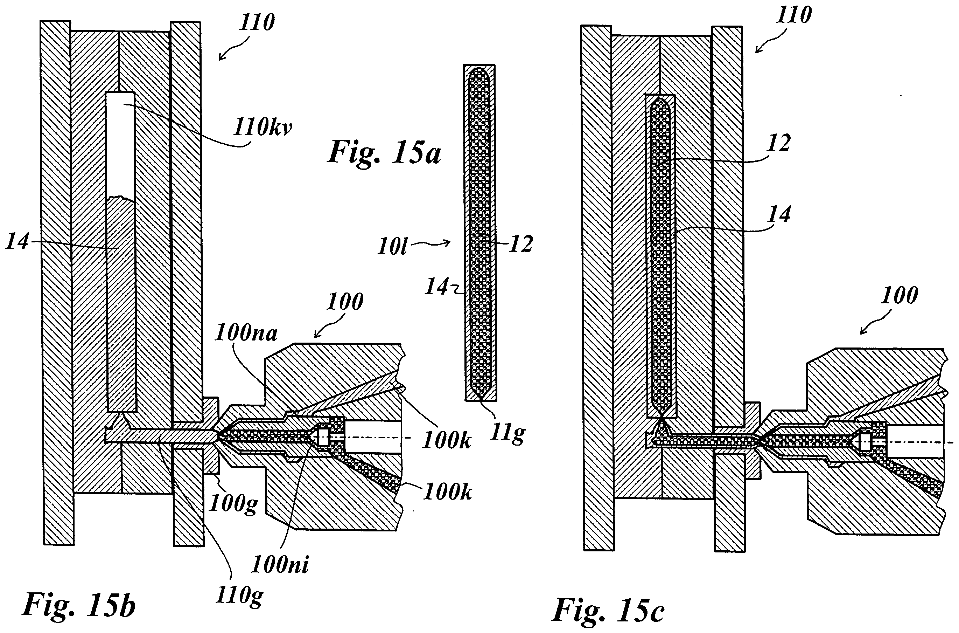

In den **Figuren 15b und 15c** ist im Unterschied zu der Einrichtung in den Figuren 14b und 14c an dem der Anspritzstelle gegenüberliegenden Stirnende der Kavität kein Überlaufraum 110ku ausgebildet. Die in dieser Fertigungseinrichtung hergestellte Dichtung ist in **Figur 15a** im Querschnitt dargestellt. Es ist erkennbar, dass das der Anspritzstelle gegenüberliegende Stirnende gleich ausgebildet ist, wie die beiden Stirnenden der Längsdichtung in Figur 13a. Die Ausgestaltung des Stirnendes der Dichtung wird durch das Nichtvorhandensein eines Überlaufraums 110ku bestimmt und erfolgt in entsprechender Weise wie in Verbindung mit Figur 13b beschrieben.

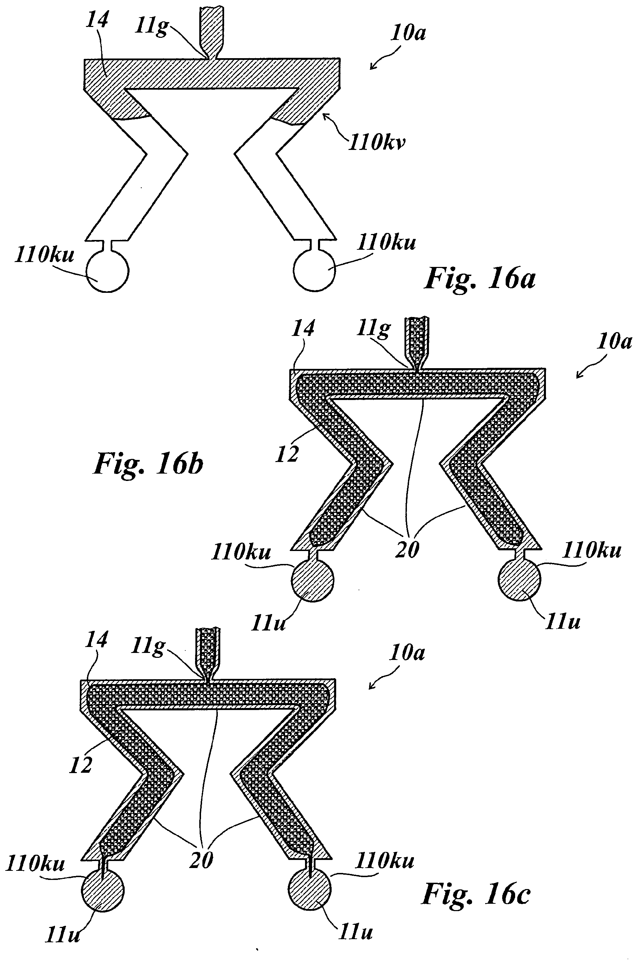

Die **Figuren 16****.** **17** **und** **18** betreffen die Fertigung von Abstreifdichtungen. Diese Figuren zeigen lediglich die Kavität 110kv der Spritzgießform 110. Die Zuleitung der Kunststoffkomponenten zur Spritzgussform 110 erfolgt auch hier unter Verwendung einer Sandwichplatte, die gleich ausgebildet sein kann, wie in den Fertigungseinrichtungen der vorangehend beschriebenen Figuren 9 bis 15. Bei den in der Kavität der Figuren 16 bis 18 hergestellten Abstreifdichtungen 10a handelt es sich um Dichtungen, wie sie z. B. in Linearlagern zum Einsatz kommen. Ein solches Linearlager ist in Figur 7a exemplarisch gezeigt. Figur 7c zeigt eine im wesentlichen plattenförmige Abstreifdichtung 10a in der Einbaulage. Figur 7d zeigt eine bügelförmige Abstreifdichtung 10a, wie sie in den in den Figuren 16, 17 und 18 gezeigten Fertigungseinrichtungen herstellbar ist.

Wesentlich bei den Abstreifdichtungen 10a ist, dass im eingebauten Zustand die Abstreifbewegung quer zur Längserstreckung der Dichtlippe 20 erfolgt. Die Dichtlippe 20 ist an der Innenseite der Schenkel ausgebildet, wie für die Abstreifdichtung 10a in Verbindung mit Figur 7d vorangehend bereits beschrieben.

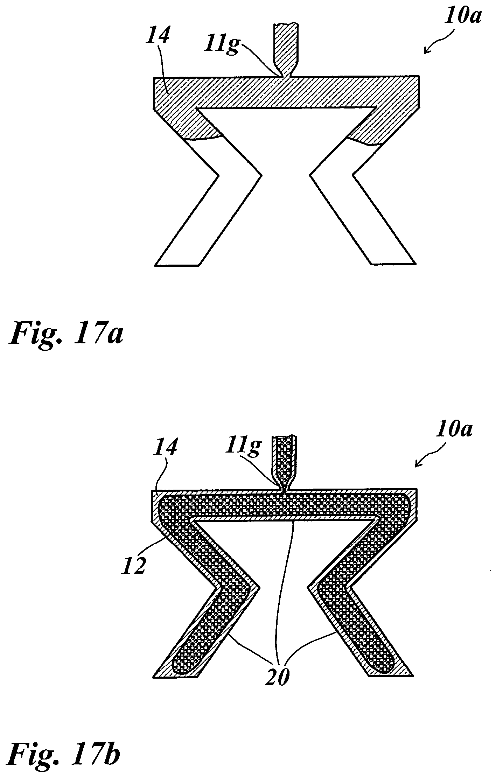

Bei den Abstreifdichtungen 10a ist bei bevorzugten Ausführungen vorgesehen, dass sich der Kern bis in das Stirnende der Schenkel erstreckt, wie dies auch bei bevorzugten Ausführungen der Längsdichtung 10l der Fall ist. Dies kann beim Spritzvorgang dadurch erreicht werden, dass die Kernkomponente bis ans fließfähige Ende geführt wird, und zwar dadurch, dass am betreffenden Stirnende der Kavität 110kv ein Überlaufraum 110ku angeordnet ist. Der Spritzvorgang erfolgt bei der Herstellung der Abstreifdichtungen 10a ebenfalls in Sandwichtechnik und im Prinzip gleich wie bei der Herstellung der Längsdichtungen 10l. In den **Figuren 16a, 16b und 16c** erfolgt die Anspritzung mittig zwischen den Stirnenden, und zwar in den Verbindungsschenkeln an der der Dichtlippe gegenüberliegenden Seite des Verbindungsschenkels. Die Anspritzung erfolgt in gleicher Weise bei der Einrichtung in den **Figuren 17a und 17b**. Der Unterschied zwischen den Fertigungseinrichtungen der Figuren 16 und 17 besteht darin, dass die Kavität 110kv in der Einrichtung der Figur 16 im Bereich der Stirnenden der Schenkel jeweils einen anschließenden Überlaufraum 110ku aufweist, während die Kavität der Einrichtung in Figur 17 keine Überlaufräume aufweist. Die Figuren 16b und 16c zeigen, dass in der Endphase des Einspritzens der Kernkomponente der Kern sich im Bereich der Stirnenden der Schenkel bis in das Stirnende der Haut erstreckt. Dies erfolgt in entsprechender Weise wie bei der Herstellung der Längsdichtungen 10l in Verbindung mit den Figuren 12c und 14c erläutert. Aufgrund des Überlaufraums 110ku erfolgt beim Zusammenfluss der Haut ein Überlauf der Haut in den Überlaufraum 110ku, wobei gleichzeitig das Ende des Kerns sich bis zum Stirnende der Dichtung hin erstreckt und je nach Prozessbedingungen sogar zu einem gewissen Anteil in den Überlaufraum 110ku überlaufen kann und somit am Stirnende der Dichtung durch den Kern hindurchgreifen kann. Die Figuren 17a und 17b zeigen im Unterschied zu den Figuren 16a, 16b und 16c die Ausbildung eines Stirnendes, wie es bei den Längsdichtungen in Figur 13a beidseitig und in Figur 15a an einer Stirnseite gezeigt ist. Diese Ausgestaltung mit im Querschnitt rundem Stirnende des Kerns, welches vor dem Stirnende der Haut mit Abstand endet, ergibt sich aufgrund dessen, dass die betreffende Kavität 110kv keinen Überlaufraum 110ku aufweist.

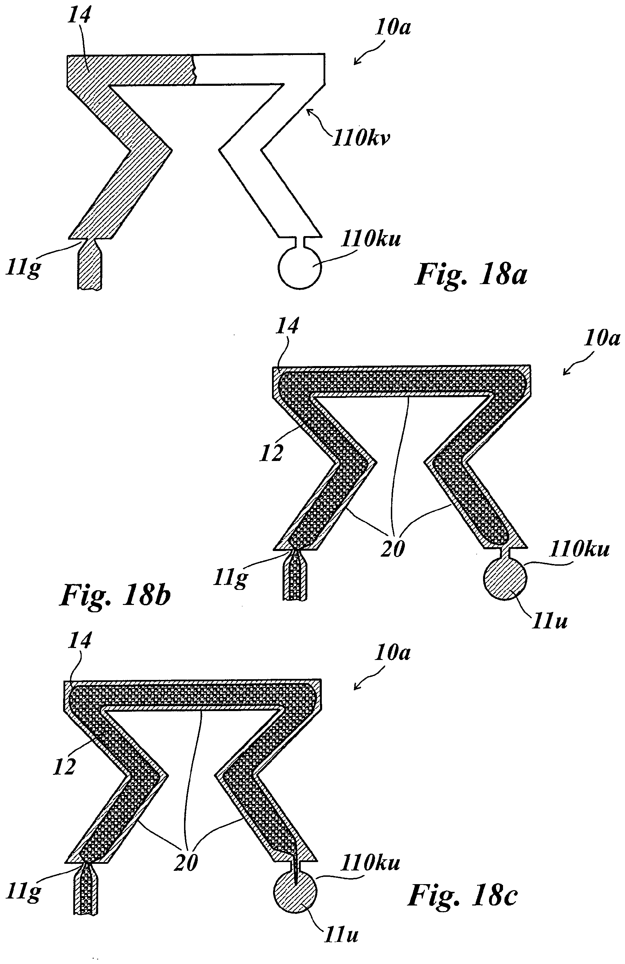

In den **Figuren 18a, 18b und 18c** ist die Herstellung einer Abstreifdichtung 10a gezeigt, bei der die Anspritzung an einem Stirnende des einen Schenkels erfolgt und bei dem am anderen Stirnende des Schenkels die Kavität einen Überlaufraum 110ku aufweist. Die Verhältnisse sind entsprechend wie bei der Herstellung der Längsdichtung in der Einrichtung der Figuren 14b und 14c. Es wird mit der Einrichtung in den Figuren 18a, 18b und 18c eine Abstreifdichtung 10a hergestellt, die am einen Stirnende die Anspritzstelle und am anderen Stirnende einen Kern aufweist, der sich bis ins Stirnende der Haut erstrecken kann, d.h. vergleichbar wie die Stirnenden bei der Herstellung in den Figuren 16a, 16b und 16c.

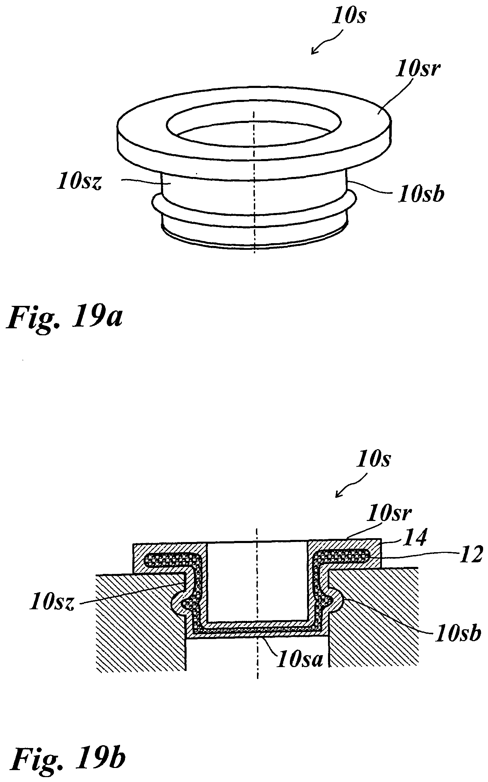

In den **Figuren 19a und 19b** ist ein weiteres Beispiel einer im Sandwichspritzgießverfahren hergestellten Dichtung dargestellt. Die Dichtung ist als abdichtender Stopfen 10s ausgebildet. Figur 19b zeigt den Stopfen 10s in seiner eingesetzten Position in einer zylindrischen Öffnung einer Wand eines nicht näher dargestellten Bauteils oder Behälters. Bei dem Bauteil oder dem Behälter kann es sich vorzugsweise um ein Bauteil bzw. einen Behälter aus Kunststoff oder Metall handeln. Der Stopfen dient dazu, die Öffnung dicht abzuschließen. Der Stopfen 10s ist als ein im wesentlichen zylinderhutförmiger Körper ausgebildet. Erweist einen zylindrischen Abschnitt 10sz und einen radial überstehenden Rand 10sr auf. Der zylindrische Abschnitt 10sz ist an dem dem überstehenden Rand 10sr gegenüberliegenden Ende über einen Abschlussboden 10sa abgeschlossen. Der zylindrische Abschnitt 10sz ist innen hohl. Der radial überstehende Rand 10sr ist an dem dem Abschlussboden 10sa abgewandten Ende offen. Der zylindrische Abschnitt 10sz weist außenseitig einen wulstförmigen Ringbund 10sb auf, der in eingesetzter Position des Stopfens 10s in eine in der zylindrischen Wandung der Öffnung ausgebildete komplementäre Ringnut eingreift.

Der Stopfen 10s weist einen harten Kern 12 auf, der von weicher Haut 14 umgeben ist. Der Kern ist als ein Körper ausgebildet, der der Form des Stopfens 10s entspricht. Der Kern 12 stabilisiert den Stopfen. Der radial überstehende Randabschnitt 10sr liegt mit der Haut seiner Unterseite auf der Wand in dem Bereich, der die Öffnung der Wand umgibt, dichtend auf. Der wulstförmige Ringbund 10sb weist einen entsprechend geformten radial vorstehenden wulstförmigen Kernabschnitt auf, der das Ein- und Ausrasten in die Ringnut und den Halt in der Ringnut unterstützt.

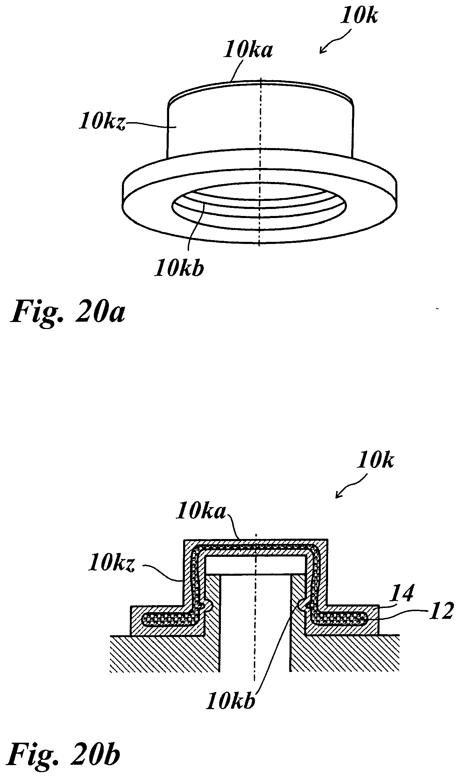

In den **Figuren 20a und 20b** ist ein weiteres Beispiel einer im Sandwichspritzgießverfahren hergestellten Dichtung dargestellt. Diese Dichtung ist als abdichtende Kappe 10k ausgebildet. Die Figur 20a zeigt diese Kappe 10k in eingebauter Position aufgesetzt, z. B. auf die Nabe einer Laufrolle. Die Kappe 10k bildet eine Schutzkappe, die das Eindringen von Schmutz in den abgedeckten Bereich, d.h. im dargestellten Fall in den Nabenbereich der Laufrolle verhindert. In dem Nabenbereich kann ein Wälzlager mit Wälzkörpern angeordnet sein.

Die Kappe 10k ist als ein ähnlich wie der Stopfen 10s der Figuren 19a und 19b ausgeformter Körper ausgebildet. Der Körper weist ebenfalls eine im wesentlichen zylinderhutförmige Formgestaltung auf. Er besteht, wie erkennbar in Figur 19b, aus einem harten Kern 12 und einer den Kern umgebenden weichen Haut 14. Der einzige Unterschied gegenüber dem Stopfen 10s der Figuren 19a und 19b besteht darin, dass die Kappe 10k nicht außenseitig, sondern innenseitig an dem Zylinderabschnitt 10kz einen Ringwulst 10kb aufweist. An der Außenseite des vorspringenden Nabenbereichs, auf dem die Kappe 10k aufgesetzt ist, ist eine komplementäre Ringnut ausgebildet. In diese Ringnut greift der Ringwulst 10kb der Kappe 10k komplementär ein. Durch die Schutzkappe 10k wird der Nabenbereich abdichtend überdeckt. Die an der Innenseite der Kappe 10k ausgebildete Haut 14 ist aus weichem Kunststoffmaterial ausgebildet. Sie liegt an der Außenseite des überdeckten Nabenbereichs an und dichtet damit ab. Der Kern 14 wirkt bei der in den Figuren 20a und 20b dargestellten Kappe 10k in gleicher Weise wie bei dem Stopfen 10s der Figuren 19a und 19b.

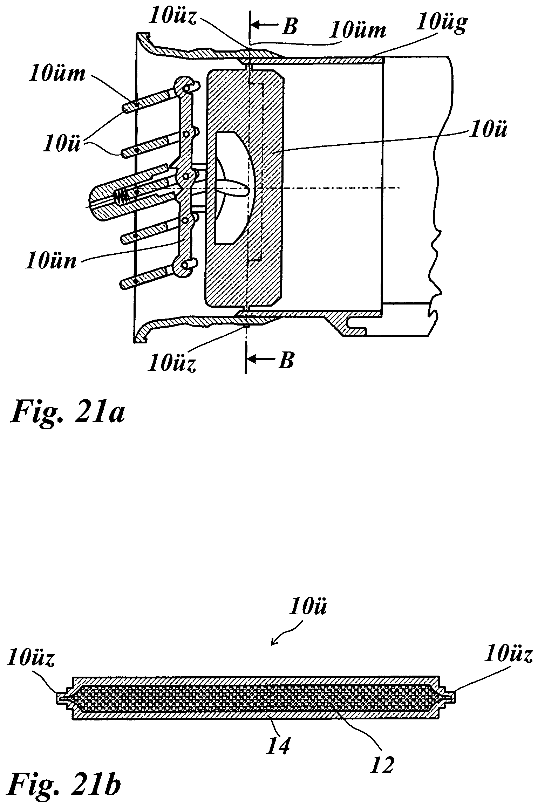

In den **Figuren 21a und 21b** ist ein Auslass eines Luftzufuhrschachtes mit horizontalen und vertikalen Lamellen 10ü dargestellt. Die Lamellen stellen weitere Beispiele von im Sandwichspritzgießverfahren hergestellten Dichtungen dar. Wie in Figur 21a erkennbar, sind die Lamellen 10ü jeweils in dem Gehäuse 10üg des Auslasses um ihre Längsmittelachse 10üm schwenkbar gelagert. In dem vorderen Abschnitt des Auslasses sind in dem dargestellten Fall horizontale Lamellen 10ü jalousieartig übereinander, um ihre jeweils horizontale Längsmittelachse 10üm schwenkbar verstellbar angeordnet. Sie sind über einen Mitnehmerstab 10ün miteinander verbunden und somit simultan schwenkbar. Stromaufwärts dahinter ist eine vertikale Lamelle 10ü um ihre vertikale Längsmittelachse 10üm verschwenkbar gelagert. Wesentlich ist, dass die Lamellen 10üm jeweils einen flachen, im dargestellten Fall, im Grundriss im wesentlichen rechteckigen Lamellenkörper aufweisen. Der Körper weist einen harten Kern 12 und eine den Kern umgebende weiche Haut 14 auf. Diese den Randbereich des Körpers bildende Haut 14 wirkt als Dichtlippe, wenn die Lamellen 10ü geschlossen aneinander oder am Gehäuse anliegen. Wie in Figur 21b erkennbar ist, ist an den kurzen Stirnseiten der Lamellen 10ü jeweils ein Achszapfen 10üz ausgebildet, der in eine Lagerhülse in einem gehäusefesten Schwenklager eingreift. Anstelle der Achszapfen 10üz kann an der betreffenden Stirnseite der Lamelle auch eine Lagerbuchse ausgeformt sein, in die ein Achszapfen des nicht dargestellten gehäusefesten Schwenklagers eingreift. Diese Lagerausgestaltung an den Stirnseiten der Lamellen 10ü ist durch den Kern 12 jeweils stabilisiert. Der Kern kann in diesem Bereich als durch die Haut 14 durchgreifend ausgebildet sein.

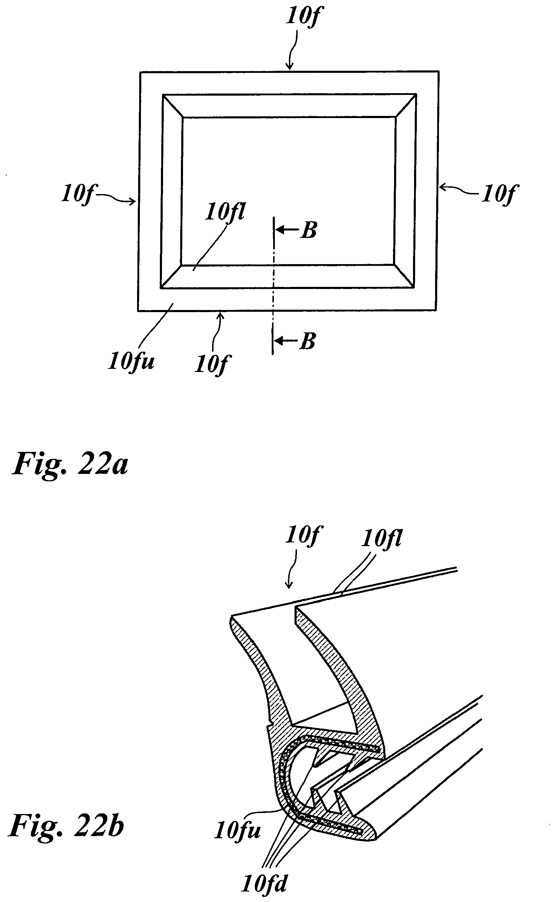

In den **Figuren 22a und 22b** ist ein Fenster in der Wand eines Gebäudes oder eines Fahrzeugs dargestellt. Das Fenster weist eine Fensterscheibendichtung 10f auf, die ein weiteres Beispiel einer im Sandwichspritzgießverfahren hergestellten Dichtung bildet. Die Dichtung 10f weist zwei eine im wesentlichen U-förmige Aufnahme bildende Aufnahmelamellen 10fl auf, die den Rand der Fensterscheibe aufnehmen. Die Aufnahmelamellen 10fl sind an der Außenseite eines im wesentlichen U-förmigen Lagerkörpers 10fu der Dichtung angeformt. Dieser Lagerkörper 10fu dient zur Befestigung der Dichtung 10f an einem ortsfesten Profilrahmen des Fensters. Der U-förmige Lagerkörper 10fu weist innenseitig an seinen U-Schenkeln gegenüberliegende Doppellamellen 10fd auf, die auf den ortsfesten Profilrahmen zur Fixierung aufgepresst werden. Diese komplex ausgeformte Fensterscheibendichtung 10f kann im Sandwichspritzgießverfahren einstückig aus Kunststoff hergestellt sein, und zwar mit einem harten Kern 12 und einer diesen außen umgebenden weichen Haut 14. Die Aufnahmelamellen 10fl sind vorzugsweise in Art von Dichtlippen, vorzugsweise aus weichem Kunststoff ausgebildet. Der U-förmige Lagerkörper 10fu ist vorwiegend als harter Kern ausgebildet. Er weist nur eine dünne äußere Haut aus weichem Kunststoff auf. Die Doppellamellen 10fd an den gegenüberliegenden Innenseiten der U-Schenkel sind vorzugsweise aus hartem Kunststoffmaterial oder aus weicher Haut mit hartem Kern ausgebildet.

Bei einer speziellen Weiterbildung der Dichtung 10f kann in dem U-förmigen Lagerkörper 10fu ein formstabiler Träger 22 integriert angeordnet sein. Er kann vergleichbar angeordnet und hergestellt wie der Träger 22 bei dem Beispiel in Figur 2 sein.

Von gleichem oder ähnlichem Aufbau können auch Beispiele von Scheibendichtungen 10f für Türen oder Fassadenelemente ausgebildet sein. Bei allen Beispielen können anstelle von Glasscheiben auch Scheiben oder Platten aus anderen Materialien, z. B. Plexiglas, aber auch Metall, Stein und diversen Kunststoffen eingesetzt sein.

Was die Herstellung sämtlicher Beispiele der Figuren 19 bis 22 betrifft, die nicht durch die Ansprüche gedeckt sind, gelten die Grundsätze und Maßnahmen, wie sie anhand der Fertigungseinrichtungen der Figuren 9 bis 17 beschrieben sind. Schließlich sei noch darauf hingewiesen, dass die vorangehende Beschreibung, die auf die Figuren Bezug nimmt, nicht beschränkt zu verstehen ist, sondern sie soll lediglich die erfindungsgemäßen Merkmale, wie sie in den Ansprüchen gegeben sind, anhand der Figuren exemplarisch erläutern.

### Bezugsziffernliste

- 10: Dichtung
- 10r: Runddichtung
- 10a: Abstreifdichtung
- 10l: Längsdichtung
- 10s: abdichtender Stopfen
- 10sz: Zylinderabschnitt
- 10sr: radial überstehender Randabschnitt
- 10sb: außenseitiger Ringbund
- 10sa: Abschlussboden
- 10k: abdichtende Kappe
- 10kz: Zylinderabschnitt
- 10kr: radial überstehender Randabschnitt
- 10kb: innenseitiger Ringbund
- 10ka: Abschlussdecke
- 10ü: Lamelle
- 10üm: Mittellängsachse
- 10üg: Gehäuse
- 10ün: Mitnahme
- 10üz: Achszapfen
- 10f: Fensterscheibendichtung
- 10fl: Aufnahmelamelle
- 10fu: Lagerkörper
- 10fd: Doppellamelle
- 11g: Anspritzstelle
- 11u: Überlaufbohne
- 12: Kern (von 10)
- 14: Haut (von 10)
- 16: Trägerbereich (von 10)
- 16a: Fixierungsbereich
- 16b: Verstärkungsbereich
- 16c: Verbindungsbereich
- 18: Dichtbereich (von 10 an 16)
- 20: Dichtlippe (von 18)
- 22: formstabiler Träger (von 10 in 12)
- 24: Verstärkungswulst (zwischen 20 und 20)
- 26: Aussparung (in 22 für 28)
- 28: Verschlaufung (zwischen 12 und 22)
- 30: formstabiles Konstruktionsteil (für 10)
- 32: Verschlaufung (zwischen 30 und 10)
- 34: Dichtungswulst (für 18)
- 36: Überlappung (zwischen 30 und 16)
- 40: Drehlager
- 41: Wälzkörper
- 42: Wälzkörperkäfig
- 43: Außenring
- 44: Innenring
- 50: Linearlager
- 51: Führungsschiene
- 52: Laufwagen
- 53: Umlenk-/Endkappe
- 100: Sandwichplatte
- 100g: Angießbuchse
- 100u: Nadeleinrichtung
- 100na: hohle Außennadel
- 100ni: massive Innennadel
- 100k: Einlasskanal Hautkomponente
- 100k: Einlasskanal Kernkomponente
- 110: Spritzgießform
- 110g: Angusskanal
- 110kv: Kavität
- 110ku: Überlaufraum

## Patentansprüche

1. Verfahren zur Herstellung einer Dichtung, die als **Längsdichtung** (10l) für
eine Linearführung ausgebildet ist, die einen gerade oder abgewinkelt sich erstreckenden platten- oder stabförmigen Grundkörper mit mindestens einer an den Grundkörper anschließenden Dichtlippe aufweist, wobei die Dichtlippe sich an zumindest einer Längsseite des Grundkörpers erstreckt und als längsgleitende Dichtlippe der Längsdichtung ausgebildet ist,
wobei die Dichtung zumindest abschnittsweise einen Kern (12) aus einem harten Kunststoff und eine Haut (14) aus einem vergleichsweise weichem Kunststoff aufweist,
wobei, der Kern (12) von der Haut (14) weitgehend vollständig umschlossen ist,
wobei der Grundkörper als Kern und Haut gebildet ist und der Grundkörper einen Hauptteil des Kerns aufweist,
wobei die mindestens eine Dichtlippe überwiegend aus Haut ausgebildet ist, indem lediglich ein Abschnitt des Kerns vom Grundkörper weg in den Anschlussbereich der im übrigen aus Haut ausgebildeten Dichtlippe hinein ragt, und der Kern (12) mindestens ein die Haut (14) durchgreifendes Kernende aufweist, welches die Haut (14) bis nach außen unter Ausbildung eines Durchbruchs durchgreift,
wobei die Dichtung durch Spritzgießen in einer Spritzgießform mit einer Kavität, die der äußeren Form der Dichtung entspricht, unter Einsatz der Sandwichtechnik hergestellt wird, wobei die Spritzgießform eine an die Kavität angrenzende Überlaufeinrichtung aufweist, über die die Ausbreitung der Hautkomponente und der Kernkomponente in bestimmten Bereichen der Kavität gesteuert wird, wobei zur Herstellung der Dichtung folgende Schritte ablaufen:
a) in die Kavität der Spritzgießform wird im Bereich eines Einspritzortes Hautkomponente derart eingespritzt, dass sich die Hautkomponente in der Kavität fortschreitend erstreckt;
b) in die die Hautkomponente enthaltende Kavität der Spritzgießform wird Kernkomponente derart eingespritzt, dass die Kernkomponente von der Hautkomponente zumindest teilweise umgeben in der Kavität fortschreitet;
c) über die Überlaufeinrichtung wird die Ausbreitung der Hautkomponente und der Kernkomponente in bestimmten Bereichen der Kavität gesteuert, indem ein Teil der in der Kavität aufgenommenen Hautkomponente und Kernkomponente in die in einem Bereich der Formwandung der Kavität angrenzend angeordnete Überlaufeinrichtung aus der Kavität als Materialüberlauf überläuft.

2. Verfahren zur Herstellung einer Dichtung als **Abstreifdichtung** (10a) ausgebildete Dichtung, die eine gerade oder abgewinkelt sich erstreckenden platten- oder stabförmigen Grundkörper mit mindestens einer an den Grundkörper anschließenden Dichtlippe aufweist, wobei die Dichtlippe sich an mindestens einer Längsseite des Grundkörpers erstreckt und als quer gleitende Dichtlippe der Abstreifdichtung ausgebildet ist,
wobei die Dichtung zumindest abschnittsweise einen Kern (12) aus einem harten Kunststoff und eine Haut (14) aus einem vergleichsweise weichen Kunststoff aufweist,
wobei die Dichtung mit dem Kern (12) und der Haut (14) durch in Sandwichtechnik Spritzgießen derart hergestellt ist, dass der Kern (12) von der Haut (14) weitgehend vollständig umschlossen ist;
wobei der Grundkörper als Kern und Haut gebildet ist und der Grundkörper einen Hauptteil des Kerns aufweist,
wobei die mindestens eine Dichtlippe überwiegend aus Haut ausgebildet ist, indem lediglich ein Abschnitt des Kerns vom Grundkörper weg in den Anschlussbereich der im übrigen aus Haut ausgebildeten Dichtlippe hineinragt,
und der Kern (12) mindestens ein die Haut (14) durchgreifendes Kernende aufweist, welches die Haut (14) bis nach außen unter Ausbildung eines Durchbruchs durchgreift,
wobei dassdie Dichtung durch Spritzgießen in einer Spritzgießform mit einer Kavität, die der äußeren Form der Dichtung entspricht, unter Einsatz der Sandwichtechnik hergestellt wird, wobei die Spritzgießform eine an die Kavität angrenzende Überlaufeinrichtung aufweist, über die die Ausbreitung der Hautkomponente und der Kernkomponente in bestimmten Bereichen der Kavität gesteuert wird, wobei zur Herstellung der Dichtung folgende Schritte ablaufen:
a) in die Kavität der Spritzgießform wird im Bereich eines Einspritzortes Hautkomponente derart eingespritzt, dass sich die Hautkomponente in der Kavität fortschreitend erstreckt;
b) in die die Hautkomponente enthaltende Kavität der Spritzgießform wird Kernkomponente derart eingespritzt, dass die Kernkomponente von der Hautkomponente zumindest teilweise umgeben in der Kavität fortschreitet;
c) über die Überlaufeinrichtung wird die Ausbreitung der Hautkomponente und der Kernkomponente in bestimmten Bereichen der Kavität gesteuert, indem ein Teil der in der Kavität aufgenommenen Hautkomponente und Kernkomponente in die in einem Bereich der Formwandung der Kavität angrenzend angeordnete Überlaufeinrichtung aus der Kavität als Materialüberlauf überläuft.

3. Verfahren nach Anspruch 1 oder 2,
**dadurch gekennzeichnet,**
**dass** zur Herstellung der Längsdichtung und/oder der Abstreifdichtung in die Überlaufeinrichtung Kernkomponente und Hautkomponente unter Ausbildung eines Durchbruchs des Kerns durch die an der Formwandung anliegende Haut austritt.

4. Verfahren zur Herstellung einer Dichtung mit einem Kern, der aus einer Kernkomponente aus Kunststoff gebildet ist und einer den Kern zumindest teilweise umgebenden Haut, die aus einer Hautkomponente aus Kunststoff gebildet ist, wobei der Kern härter als die Haut ausgebildet ist,
wobei vorgesehen ist, dass die Dichtung zumindest abschnittsweise einen Kern (12) aus einem harten Kunststoff und eine Haut (14) aus einem vergleichsweise weichen Kunststoff aufweist,
wobei vorgesehen ist,
- dass die Dichtung mit dem Kern (12) und der Haut (14) durch in Sandwichtechnik Spritzgießen derart hergestellt ist, dass der Kern (12) von der Haut (14) weitgehend vollständig umschlossen ist;
- dass die Dichtung als **Runddichtung** ausgebildet ist, die einen geschlossen ringförmigen Grundkörper mit mindestens einer an den Grundkörper anschließenden Dichtlippe aufweist, wobei die Dichtlippe sich an dem Grundkörper radial innen und/oder radial außen ringförmig erstreckt, wobei der Grundkörper als Kern und Haut gebildet ist und der Grundkörper einen Hauptteil des Kerns aufweist,
wobei die mindestens eine Dichtlippe überwiegend aus Haut ausgebildet ist, indem lediglich ein Abschnitt des Kerns vom Grundkörper weg in den Anschlussbereich der im übrigen aus Haut ausgebildeten Dichtlippe hinein ragt,
wobei der Kern (12) mindestens ein die Haut (14) durchgreifendes Kernende aufweist, welches die Haut (14) bis nach außen unter Ausbildung eines Durchbruchs durchgreift,
wobei der Kern (12) als geschlossen ringförmiger Kern ausgebildet ist, dass die Dichtung durch Spritzgießen in einer Spritzgießform mit einer Kavität, die der äußeren Form der Dichtung entspricht, unter Einsatz der Sandwichtechnik hergestellt wird, wobei die Spritzgießform eine an die Kavität angrenzende Überlaufeinrichtung aufweist, über die die Ausbreitung der Hautkomponente und der Kernkomponente in bestimmten Bereichen der Kavität gesteuert wird, wobei die Überlaufeinrichtung den Zusammenfluss der Hautkomponente aufnimmt, um einen Zusammenfluss der Kernkomponente unter Ausbildung eines geschlossen ringförmigen Kerns zu ermöglichen, wobei zur Herstellung der Dichtung folgende Schritte ablaufen:
a) in die Kavität der Spritzgießform wird im Bereich eines Einspritzortes Hautkomponente derart eingespritzt, dass sich die Hautkomponente in der Kavität fortschreitend erstreckt;
b) in die die Hautkomponente enthaltende Kavität der Spritzgießform wird Kernkomponente derart eingespritzt, dass die Kernkomponente von der Hautkomponente zumindest teilweise umgeben in der Kavität fortschreitet;
c) über die Überlaufeinrichtung wird die Ausbreitung der Hautkomponente und der Kernkomponente in bestimmten Bereichen der Kavität gesteuert, indem ein Teil der in der Kavität aufgenommenen Hautkomponente und Kernkomponente in die in einem Bereich der Formwandung der Kavität angrenzend angeordnete Überlaufeinrichtung aus der Kavität als Materialüberlauf überläuft.

5. Verfahren nach einem der Ansprüche 1 bis 4,
**dadurch gekennzeichnet,**
**dass** die Überlaufeinrichtung nur eine Überlaufform oder mehrere Überlaufformen angrenzend an eine Formfläche der Kavität der Spritzgießform aufweist.

6. Verfahren nach einem der Ansprüche 1 bis 5,
**dadurch gekennzeichnet,**
**dass** an zwei gegenüberliegenden Enden der Kavität jeweils eine Überlaufeinrichtung angeordnet ist.

7. Verfahren nach Anspruch 6,
**dadurch gekennzeichnet,**
**dass** in einem Bereich der Kavität zwischen den gegenüberliegenden Enden, an denen jeweils eine Überlaufeinrichtung angeordnet ist, der Einspritzort angeordnet ist.

## Claims

1. Method for the production of a seal designed as a longitudinal seal (101) for a linear track having a plate-shaped or bar-shaped base body that extends in a straight line or at an angle, said base body having at least one sealing lip adjoining the base body, wherein the sealing lip extends on at least one longitudinal side of the base body and is formed as a longitudinally sliding sealing lip of the longitudinal seal,
wherein the seal has, at least in sections, a core (12) made from a hard plastic, and a skin (14) made from a comparatively weak plastic,
wherein the core (12) is substantially completely encased by the skin (14),
wherein the base body is formed as core and skin and the base body has a main part of the core,
wherein the at least one sealing lip is formed predominantly of skin, in that only one section of the core protrudes away from the base body into the connection region of the sealing lip that is otherwise formed of skin, and the core (12) has at least one core end that passes through the skin (14), said core end passing through to the outside of the skin (14) and forming an aperture,
wherein the seal is produced, using sandwich technology, by injection moulding in an injection mould having a cavity that corresponds to the outer shape of the seal, wherein the injection mould has an overflow device adjoining the cavity, said overflow device being used to control the expansion of the skin component and of the core component in specific regions of the cavity, wherein the following steps take place for the production of the seal:
a) skin component is injected into the cavity of the injection mould in the region of an injection site, in such a way that the skin component extends progressively within the cavity;
b) core component is injected into the cavity of the injection mould containing the skin component in such a way that the core component progresses within the cavity to be at least partially encased by the skin component;
c) the expansion of the skin component and of the core component in specific regions of the cavity is controlled by the overflow device by a part of the skin component and core component accommodated in the cavity overflowing out of the cavity as material overflow, and into the overflow device arranged adjoining the cavity in a region of the moulding wall.

2. Method for the production of a seal designed as a wiper seal (10a), which has a plate-shaped or bar-shaped base body that extends in a straight line or at an angle, said base body having at least one sealing lip adjoining the base body, wherein the sealing lip extends on at least one longitudinal side of the base body and is formed as a transversely sliding sealing lip of the wiper seal,
wherein the seal has, at least in sections, a core (12) made from a hard plastic, and a skin (14) made from a comparatively weak plastic,
wherein the seal having the core (12) and the skin (14) is produced using sandwich technology by injection moulding in such a way that the core (12) is substantially completely encased by the skin (14);
wherein the base body is formed as core and skin and the base body has a main part of the core,
wherein the at least one sealing lip is formed predominantly of skin, in that only one section of the core protrudes away from the base body into the connection region of the sealing lip that is otherwise formed of skin,
and the core (12) has at least one core end that passes through the skin (14), said core end passing through to the outside of the skin (14) and forming an aperture,
wherein the seal is produced, using sandwich technology, by injection moulding in an injection mould having a cavity that corresponds to the outer shape of the seal, wherein the injection mould has an overflow device adjoining the cavity, said overflow device being used to control the expansion of the skin component and of the core component in specific regions of the cavity, wherein the following steps take place for the production of the seal:
a) skin component is injected into the cavity of the injection mould in the region of an injection site, in such a way that the skin component extends progressively within the cavity;
b) core component is injected into the cavity of the injection mould containing the skin component in such a way that the core component progresses within the cavity to be at least partially encased by the skin component;
c) the expansion of the skin component and of the core component in specific regions of the cavity is controlled by the overflow device by a part of the skin component and core component accommodated in the cavity overflowing out of the cavity as material overflow, and into the overflow device arranged adjoining the cavity in a region of the moulding wall.

3. Method according to claim 1 or 2,
**characterised in that**
for the production of the longitudinal seal and/or the wiper seal, core component and skin component discharge into the overflow device, the core forming an aperture through the skin adjoining the moulding wall.

4. Method for the production of a seal having a core formed from a core component made of plastic and a skin at least partially encasing the core, said skin being formed from a plastic skin component, wherein the core is harder than the skin,
wherein it is provided that the seal has, at least in sections, a core (12) made of a hard plastic and a skin (14) made of a comparatively weak plastic,
wherein it is provided that,
- the seal having the core (12) and the skin (14) is produced using sandwich technology by injection moulding in such a way that the core (12) is substantially completely encased by the skin (14);
- the seal is designed as an O-seal that has a closed, annular base body having at least one sealing lip adjoining the base body, wherein the sealing lip annularly extends radially inwardly and/or radially outwardly on the base body,
wherein the base body is formed as core and skin and the base body has a main part of the core,
wherein the at least one sealing lip is formed predominantly of skin, in that only one section of the core protrudes away from the base body into the connection region of the sealing lip that is otherwise formed of skin,
wherein the core (12) has at least one core end that passes through the skin (14), said core end passing through to the outside of the skin (14) and forming an aperture,
wherein the core (12) is formed as a closed, annular core,
the seal is produced, using sandwich technology, by injection moulding in an injection mould having a cavity that corresponds to the outer shape of the seal, wherein the injection mould has an overflow device adjoining the cavity, said overflow device being used to control the expansion of the skin component and of the core component in specific regions of the cavity, wherein the overflow device accommodates the confluence of the skin component in order to enable a confluence of the core component to form a closed, annular core,
wherein the following steps take place for the production of the seal:
a) skin component is injected into the cavity of the injection mould in the region of an injection site, in such a way that the skin component extends progressively within the cavity;
b) core component is injected into the cavity of the injection mould containing the skin component in such a way that the core component progresses within the cavity to be at least partially encased by the skin component;
c) the expansion of the skin component and of the core component in specific regions of the cavity is controlled by the overflow device by a part of the skin component and core component accommodated in the cavity overflowing out of the cavity as material overflow, and into the overflow device arranged adjoining the cavity in a region of the moulding wall.

5. Method according to one of claims 1 to 4,
**characterised in that**
the overflow device has only one overflow mould or several overflow moulds adjoining a moulding surface of the cavity of the injection mould.

6. Method according to one of claims 1 to 5,
**characterised in that**
a respective overflow device is arranged at two opposite ends of the cavity.

7. Method according to claim 6,
**characterised in that**
the injection site is arranged in a region of the cavity between the opposite ends at which a respective overflow device is arranged.

## Revendications

1. Procédé de fabrication d'un joint d'étanchéité qui est conçu comme un joint d'étanchéité longitudinal (10l) pour un guidage linéaire, qui comprend un corps de base en forme de plaque ou de tige, s'étendant de manière droite ou inclinée, avec au moins une lèvre d'étanchéité se raccordant au corps de base, dans lequel la lèvre d'étanchéité s'étend au moins sur un côté longitudinal du corps de base et est conçue comme une lèvre d'étanchéité coulissant longitudinalement du joint d'étanchéité longitudinal,
dans lequel le joint d'étanchéité comprend, au moins à certains endroits, un noyau (12) constitué d'une matière plastique dure et une enveloppe (14) constituée d'une matière plastique relativement souple,
dans lequel le noyau (12) est entouré globalement entièrement par l'enveloppe (14),
dans lequel le corps de base est conçu comme un noyau et une enveloppe et le corps de base comprend une partie principale du noyau,
dans lequel l'au moins une lèvre d'étanchéité est conçue, en majeure partie, comme une enveloppe, grâce au fait que seule une portion du noyau dépasse du corps de base vers la zone de raccordement de la lèvre d'étanchéité constituée par ailleurs de l'enveloppe et le noyau (12) comprend au moins une extrémité de noyau traversant l'enveloppe (14), qui traverse l'enveloppe (14) jusque vers l'extérieur en formant une percée,
dans lequel le joint d'étanchéité est fabriqué par moulage par injection dans un moule de moulage par injection avec une cavité qui correspond à la forme externe du joint d'étanchéité, à l'aide de la technique du sandwich, dans laquelle le moule de moulage par injection comprend un dispositif de trop-plein adjacent à la cavité, par l'intermédiaire duquel la propagation du composant d'enveloppe et du composant de noyau dans certaines zones de la cavité est contrôlée, dans lequel, pour la fabrication du joint d'étanchéité, les étapes suivantes sont exécutées :
a) dans la cavité du moule de moulage par injection, au niveau d'un point d'injection, le composant d'enveloppe est injecté, de façon à ce que le composant d'enveloppe s'étende de manière progressive dans la cavité ;
b) dans la cavité du moule de moulage par injection contenant le composant d'enveloppe, le composant de noyau est injecté de façon à ce que le composant de noyau progresse dans la cavité, entouré au moins partiellement par le composant d'enveloppe ;
c) par l'intermédiaire du dispositif de trop-plein, la propagation du composant d'enveloppe et du composant de noyau dans certaines zones de la cavité est contrôlée, grâce au fait qu'une partie du composant d'enveloppe et du composant de noyau logés dans la cavité s'écoule, sous la forme d'un trop-plein de matériau, hors de la cavité vers le dispositif de trop-plein disposé dans une zone de la paroi du moule, de manière adjacente à la cavité.

2. Procédé de fabrication d'un joint d'étanchéité sous la forme d'un joint d'étanchéité racleur (10a), qui comprend un corps de base en forme de plaque ou de tige, s'étendant de manière droite ou inclinée, avec au moins une lèvre d'étanchéité se raccordant au corps de base, dans lequel la lèvre d'étanchéité s'étend au moins sur un côté longitudinal du corps de base et est conçue comme une lèvre d'étanchéité coulissant transversalement du joint d'étanchéité racleur,
dans lequel le joint d'étanchéité comprend, au moins à certains endroits, un noyau (12) constitué d'une matière plastique dure et une enveloppe (14) constituée d'une matière plastique relativement souple,
dans lequel le joint d'étanchéité avec le noyau (12) et l'enveloppe (14) est fabriqué à l'aide d'un moulage par injection avec la technique du sandwich de façon à ce que le noyau (12) soit entouré globalement entièrement par l'enveloppe (14) ;
dans lequel le corps de base est conçu comme un noyau et une enveloppe et le corps de base comprend une partie principale du noyau,
dans lequel l'au moins une lèvre d'étanchéité est conçue, en majeure partie, comme une enveloppe, grâce au fait que seule une portion du noyau dépasse du corps de base vers la zone de raccordement de la lèvre d'étanchéité constituée par ailleurs de l'enveloppe et le noyau (12) comprend au moins une extrémité de noyau traversant l'enveloppe (14), qui traverse l'enveloppe (14) jusque vers l'extérieur en formant une percée,
dans lequel le joint d'étanchéité est fabriqué par moulage par injection dans un moule de moulage par injection avec une cavité qui correspond à la forme externe du joint d'étanchéité, à l'aide de la technique du sandwich, dans laquelle le moule de moulage par injection comprend un dispositif de trop-plein adjacent à la cavité, par l'intermédiaire duquel la propagation du composant d'enveloppe et du composant de noyau dans certaines zones de la cavité est contrôlée, dans lequel, pour la fabrication du joint d'étanchéité, les étapes suivantes sont exécutées :
a) dans la cavité du moule de moulage par injection, au niveau d'un point d'injection, le composant d'enveloppe est injecté, de façon à ce que le composant d'enveloppe s'étende de manière progressive dans la cavité ;
b) dans la cavité du moule de moulage par injection contenant le composant d'enveloppe, le composant de noyau est injecté de façon à ce que le composant de noyau progresse dans la cavité, entouré au moins partiellement par le composant d'enveloppe ;
c) par l'intermédiaire du dispositif de trop-plein, la propagation du composant d'enveloppe et du composant de noyau dans certaines zones de la cavité est contrôlée, grâce au fait qu'une partie du composant d'enveloppe et du composant de noyau logés dans la cavité s'écoule, sous la forme d'un trop-plein de matériau, hors de la cavité vers le dispositif de trop-plein disposé dans une zone de la paroi du moule, de manière adjacente à la cavité.

3. Procédé selon la revendication 1 ou 2
**caractérisé en ce que**
pour la fabrication du joint d'étanchéité longitudinal et/ou le joint d'étanchéité racleur, le composant de noyau et le composant d'enveloppe sortent dans le dispositif de trop-plein par l'enveloppe s'appuyant contre la paroi du moule en formant une percée du noyau.

4. Procédé de fabrication d'un joint d'étanchéité avec un noyau qui est constitué d'un composant de noyau en matière plastique et d'une enveloppe entourant au moins partiellement le noyau, qui est constituée d'un composant d'enveloppe en matière plastique, dans lequel le noyau est plus dur que l'enveloppe,
dans lequel il est prévu que le joint d'étanchéité comprenne, au moins à certains endroits, un noyau (12) en matière plastique dure et une enveloppe (14) en matière plastique relativement souple,
dans lequel il est prévu
- que le joint d'étanchéité avec le noyau (12) et l'enveloppe (14) soit fabriqué par moulage par injection avec une technique de sandwich, de façon à ce que le noyau (12) soit entouré globalement entièrement par l'enveloppe (14) ;
- que le joint d'étanchéité soit conçu comme un joint d'étanchéité circulaire qui comprend un corps de base annulaire fermé avec au moins une lèvre d'étanchéité se raccordant au corps de base, dans lequel la lèvre d'étanchéité s'étend de manière annulaire radialement à l'intérieur et/ou à l'extérieur sur le corps de base, dans lequel le corps de base est constitué d'un noyau et d'une enveloppe et le corps de base comprend une partie principale du noyau,
dans lequel l'au moins une lèvre d'étanchéité est constituée majoritairement d'enveloppe, grâce au fait que seule une portion du noyau dépasse du corps de base vers la zone de raccordement de la lèvre d'étanchéité constituée par ailleurs de l'enveloppe,
dans lequel le noyau (12) comprend au moins une extrémité de noyau traversant l'enveloppe (14), qui traverse l'enveloppe (14) jusque vers l'extérieur en formant une percée,
dans lequel le noyau (12) est conçu comme un noyau annulaire fermé,
le joint d'étanchéité est fabriqué par moulage par injection dans un moule de moulage par injection avec une cavité qui correspond à la forme externe du joint d'étanchéité, à l'aide de la technique du sandwich, dans laquelle le moule de moulage par injection comprend un dispositif de trop-plein adjacent à la cavité, par l'intermédiaire duquel la propagation du composant d'enveloppe et du composant de noyau dans certaines zones de la cavité est contrôlée, dans lequel le dispositif de trop-plein accueille la jonction du composant d'enveloppe afin de permettre une jonction du composant de noyau en formant un noyau annulaire fermé, dans lequel, pour la fabrication du joint d'étanchéité, les étapes suivantes sont exécutées :
a) dans la cavité du moule de moulage par injection, au niveau d'un point d'injection, le composant d'enveloppe est injecté, de façon à ce que le composant d'enveloppe s'étende de manière progressive dans la cavité ;
b) dans la cavité du moule de moulage par injection contenant le composant d'enveloppe, le composant de noyau est injecté de façon à ce que le composant de noyau progresse dans la cavité, entouré au moins partiellement par le composant d'enveloppe ;
c) par l'intermédiaire du dispositif de trop-plein, la propagation du composant d'enveloppe et du composant de noyau dans certaines zones de la cavité est contrôlée, grâce au fait qu'une partie du composant d'enveloppe et du composant de noyau logés dans la cavité s'écoule, sous la forme d'un trop-plein de matériau, hors de la cavité vers le dispositif de trop-plein disposé dans une zone de la paroi du moule, de manière adjacente à la cavité.

5. Procédé selon l'une des revendications 1 à 4,
**caractérisé en ce que**
le dispositif de trop-plein comprend seulement une forme de trop-plein ou plusieurs formes de trop-plein, adjacentes à une surface de la cavité du moule de moulage par injection.

6. Procédé selon l'une des revendications 1 à 5,
**caractérisé en ce que**
sur chacune de deux extrémités opposées de la cavité est disposé un dispositif de trop-plein.

7. Procédé selon la revendication 6,
**caractérisé en ce que**
dans une zone de la cavité, entre les extrémités opposées, au niveau desquelles est disposé un dispositif de trop-plein, se trouve le point d'injection.
